# EUROPEAN PATENT APPLICATION

(11) **EP 4 848 018 A1**
(43) Date of publication of application: **02.12.2026**
(21) Application number: 25179408.7
(22) Date of filing: 28.05.2025
(51) Int. Cl.: G05B 19/418, G05B 13/02

(54) **A METHOD AND A DEVICE FOR PREDICTING AN OCCURRENCE OF A SURFACE DEFECT IN A SURFACE TREATMENT PROCESS**

(71) Applicant: Henkel AG & Co. KGaA, 40589 Düsseldorf (DE)
(72) Inventor: Bhattbhatt, Vrunda, 411036 Pune (IN); Padhi, Ajitkumar, 411057 Pune (IN); Bharadwaj, Barun, 122002 Gurgaon (IN)

(57) **Abstract**

The disclosure relates to a method of predicting an occurrence of a surface defect in a surface treatment process. The method includes: (1) Applying one or more process parameters describing conditions during the surface treatment process and/or one or more operation parameters describing the operation of the surface treatment process to a machine-learning model and (2) predicting the occurrence of the surface defect in the surface treatment process using the machine-learning model.

## Description

### Technical Field

Various embodiments relate generally to a method and a device for predicting an occurrence of a surface defect in a surface treatment process.

### Background

In the automotive production industry, surface treatment processes are critical for ensuring quality and durability. While current research primarily focuses on defect detection, there is a notable lack of studies on defect prediction, particularly in surface treatment processes. No existing methodologies address predictive modeling for defects using bath parameters and environmental factors in this domain.

Current solutions predominantly involve automated visual inspection systems that identify existing defects using image processing techniques. These methods, while effective for detection, do not account for dynamic manufacturing variables such as temperature, humidity, and chemical properties, which are critical in predicting defects.

Numerous studies have explored automated visual inspection systems for defect detection in automotive manufacturing, as described in Molina, J., et al. (2019). An Automatic Surface Defect Inspection System for Automobiles. Sensors, 19(3), 644, or Zhang, Y., et al. (2020). Research Progress of Automated Visual Surface Defect Detection for Metal Planar Materials: A Comprehensive Survey. PMC.

Conventional methodologies primarily focus on identifying existing defects rather than predicting their occurrence. For instance, automated systems often utilize image processing techniques to detect surface defects based on visual characteristics, as described in He, Y., et al. (2024). An effective MID-based visual defect detection method for specular car body surface.

However, these approaches are limited as they do not account for the dynamic nature of manufacturing environments where variables such as temperature, humidity, and alkali of bath can significantly influence defect formation, as described in Monolithic Power. (2023). Environmental Influences: Studies emphasize the need for incorporating environmental factors into predictive models to improve accuracy.

Research has shown that environmental factors play a crucial role in the quality of surface treatments. Variations in humidity and temperature can affect the adhesion properties of coatings used in surface treatments. Despite this knowledge, few studies have integrated these operational parameters into predictive models. Current literature primarily emphasizes visual inspection techniques without adequately addressing how these external factors contribute to defect occurrence, as described in Ding, R., Zhang, C., Zhu, Q., Liu, H. (2020). Unknown defect detection for printed circuit board based on multi-scale deep similarity measure method, and Liu, K.; Li A.; Wen X., Chen H.; Yang P.; Steel Surface Defect Detection Using GAN and One-Class Classifier.

The necessity for predictive models is further underscored by findings that indicate defects often arise from complex interactions between multiple variables during production. Conventional methods relying solely on visual inspection are usually insufficient for addressing these complexities.

Recent advances in machine learning have shown promise for improving both defect detection and prediction capabilities within manufacturing environments. Studies have demonstrated that machine learning algorithms can analyze large datasets to identify patterns associated with defects, as described in Kim, M.S., Park, T., Park, P. (2019). Classification of Steel Surface Defect Using Convolutional Neural Network with Few Images, and Hu, B., Wang, J. (2020). Detection of PCB Surface Defects with Improved Faster-RCNN and Feature Pyramide Network.

Moreover, deep learning techniques have been successfully applied to automate visual inspections and improve classification accuracy, as described in Mei, S., Yang, H., Yin, Z. (2018). An Unsupervised-Learning Based Approach for Automated Defect Inspection on Textured Surfaces, and Yang, H., Chen, Y., Song, K., Yin, Z. (2019). Multiscale Feature-Clustering-Based Fully Convolutional Autoencoder for Fast Accurate Visual Inspection of Texture Surface Defects. However, these approaches often neglect the integration of operational parameters that significantly impact defect formation.

The article "Predictive Quality Defect Detection Using Machine Learning Algorithms: A Case Study from Automobile Industry" by Muhammed Hakan Yorulmu 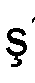 ¹, Hür Bersam Bolat¹, and Çaĝatay Bahadir²; ¹Department of Management Engineering, Istanbul Technical University, Istanbul, Turkey (yorulmus, bolat @itu.edu.tr and ²Department of Information and Communication Technologies, TOFAS Turkish Automobile Factory Joint-Stock Company, Bursa, Turkey (cagatay.bahadir@tofas.com.tr); DOI: 10.1007/978-3-030-85577-2_31; published August 20201 in book INFUS 2021: Intelligent and Fuzzy Techniques for Emerging Conditions and Digital Transformation (pp.pp 263-270), publisher: Springer, Cham relates to a study which aims to establish a predictive quality model that can detect defect-free approved but faulty products overlooked during the quality inspection operations. Machine learning methods are used to analyze the relationship between quality control data and customer complaints. For this purpose, the last quality stage data of an automobile manufacturer's brake system from 2018 to 2020 is used. Machine learning models are constructed using logistic regression, ridge regression, support vector machine, random forest classification tree, gradient boost, XGBoost, LightGBM, and CatBoost algorithms. The results of specificity and negative prediction value show that the Gradient Boost and CatBoost algorithms have the best classification benefit for detecting the rare events.

### Summary

The disclosure provides a method of predicting an occurrence of a surface defect in a surface treatment process. The method includes applying one or more process parameters describing conditions during the surface treatment process and/or one or more operation parameters describing the operation of the surface treatment process to a machine-learning model. The method further includes predicting the occurrence of the surface defect in the surface treatment process using the machine-learning model.

### Brief Description of the Drawings

In the drawings, like reference characters generally refer to the same parts throughout the different views. The drawings are not necessarily to scale, emphasis instead generally being placed upon illustrating the principles of various embodiments. In the following description, various embodiments are described with reference to the following drawings, in which:
FIG. 1 shows a surface treatment process according to an exemplary embodiment of the disclosure;
FIG. 2A and 2B show a surface defect being a water break;
FIG. 3A and 3B show a surface defect being an etch mark;
FIG. 4A and 4B show a surface defect being flow marks;
FIG. 5A and 5B show a surface defect being patchy appearance;
FIG. 6A and 6B show a surface defect being oil spots;
FIG. 7A and 7B show a surface defect being dry oil patches;
FIG. 8A and 8B show a surface defect being black dust;
FIG. 9A and 9B show a surface defect being yellow patches;
FIG. 10A and 10B show a surface defect being drip mark;
FIG. 11 shows a device for performing a method of the disclosure according to an exemplary embodiment of the disclosure;
FIG. 12 shows the interaction between a surface treatment process and a device for performing a method of the disclosure according to an exemplary embodiment of the disclosure;
FIG. 13 shows a method of predicting an occurrence of a surface defect in a surface treatment process according to an exemplary embodiment of the disclosure;
FIG. 14 shows operation parameters according to an exemplary embodiment of the disclosure;
FIG. 15 shows a vehicle manufacturing process according to an exemplary embodiment of the disclosure;
FIG. 16 shows process parameters according to an exemplary embodiment of the disclosure;
FIG. 17 shows a decision tree being part of a machine-learning model;

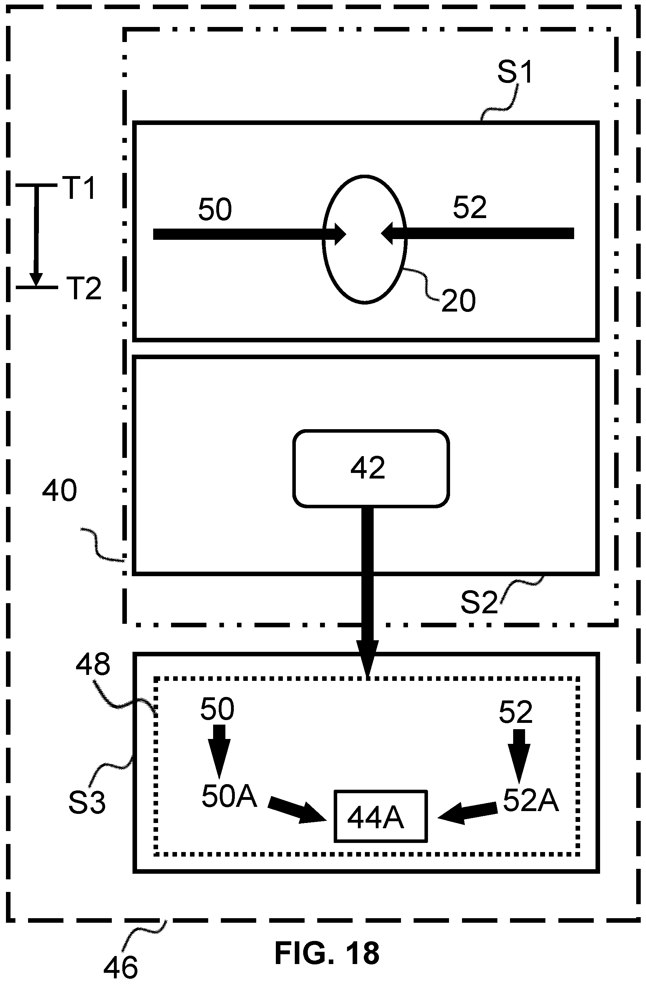

FIG. 18 shows a method for controlling a surface treatment process according to an exemplary embodiment of the disclosure;
FIG. 19 shows a method of training a machine-learning model according to an exemplary embodiment of the disclosure;
FIG. 20 shows another method of training a machine-learning model according to an exemplary embodiment of the disclosure;
FIG. 21 shows a method of monitoring a surface treatment process according to an exemplary embodiment of the disclosure;
FIG. 22 shows a computer readable medium according to an exemplary embodiment of the disclosure;
FIG. 23 shows a computer program product according to an exemplary embodiment of the disclosure; and
FIG. 24 shows a device for implementing methods of the disclosure according to an exemplary embodiment of the disclosure.

### Description

The following detailed description refers to the accompanying drawings that show, by way of illustration, specific details and embodiments in which the invention may be practiced.

The word "exemplary" is used herein to mean "serving as an example, instance, or illustration". Any embodiment or design described herein as "exemplary" is not necessarily to be construed as preferred or advantageous over other embodiments or designs.

The word "over" used with regards to a deposited material formed "over" a side or surface, may be used herein to mean that the deposited material may be formed "directly on", e.g. in direct contact with, the implied side or surface. The word "over" used with regards to a deposited material formed "over" a side or surface, may be used herein to mean that the deposited material may be formed "indirectly on" the implied side or surface with one or more additional layers being arranged between the implied side or surface and the deposited material.

Various aspects develop predictive frameworks incorporating environmental and operational parameters to enhance quality control processes in automotive manufacturing.

In the automotive production industry, surface treatment processes are critical for ensuring quality and durability. Surface treatment processes conventionally focus on detecting defects. Current conventional solutions for surface treatment processes predominantly involve automated visual inspection systems that identify existing defects using image processing techniques. These conventional methods, while effective for detection, do not account how environmental and operational parameters may influence defect formation. Conventionally a surface defect of a surface treatment process is identified, analyzed backwards in time with regard to parameters at different stages of the surface process and remedied forward in time by adjusting parameters at different stages of the respective surface treatment process.

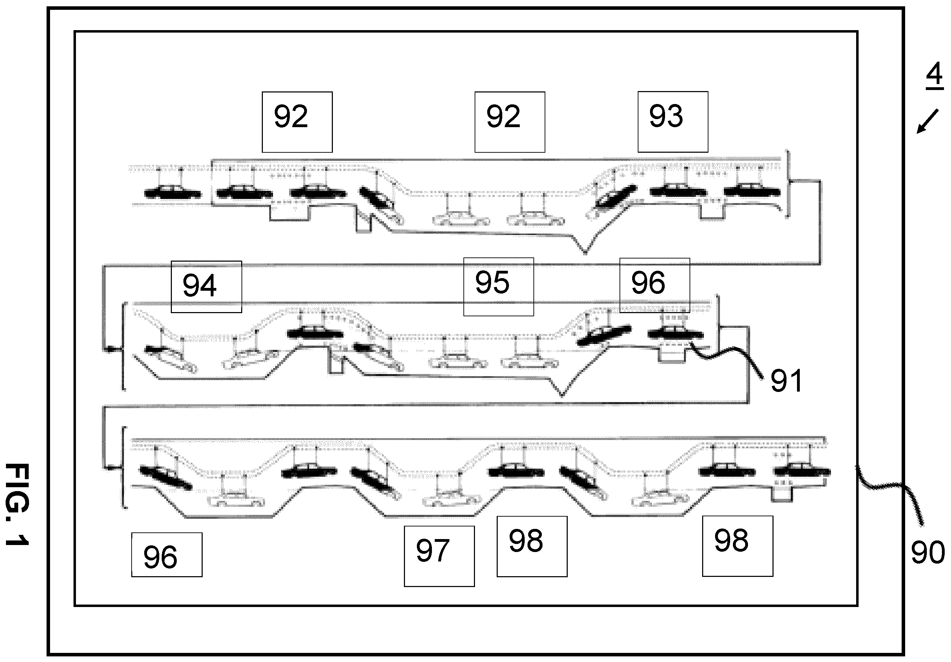

An example for a surface treatment process 4 in automotive production industry according to FIG. 1 includes a surface treatment line 90, which prepares vehicle bodies 91 for painting and provides corrosion protective coating by cleaning and chemically treating them. The surface treatment line 91 according to FIG. 1 may include or may consist for example of several stages, each with multiple tanks or baths, through which the vehicle bodies 91 pass. The surface treatment line 90 incorporating the surface treatment process 4 may include the following stages according to FIG. 1:
92: Degreasing/Cleaning
   This stage removes dirt, oil, and other contaminants from the vehicle body 91 using chemical solutions. Two common application methods are:
   (i) Dip: The vehicle body 91 is immersed in a tank filled with the cleaning chemical.
   (ii) Spray: The cleaning chemical is sprayed onto the vehicle body 91.
93: Industrial Rinsing
   At this stage, following degreasing, the vehicle body 91 is rinsed with industrial water to remove any remaining chemical residue before the activation stage.
94: Activation
   At this stage, a powder or liquid activating product is added prior to the phosphate treatment. Activation creates a homogeneous surface that promotes even phosphating. Also, activation prevents from defects like patchy or inconsistent coatings.
95: Phosphating
   At this stage, after activation, it moves to Tri-cationic phosphating process, which generates a fine crystalline coating of manganese and nickel containing zinc phosphate. The crystalline layer has very good corrosion protection properties and is an excellent foundation for subsequent coating.
96: Industrial Rinsing
   At this stage, following phosphating, the vehicle body 91 is rinsed with industrial water to remove any remaining chemical residue before the passivation stage.
97: Passivation
   At this stage, passivation liquid chemical is used as a next process step to minimize under film corrosion and improve paint adhesion.
98: Deionized Rinsing
   At this stage, following passivation, the vehicle body 91 is rinsed with deionized water prior to the electro-coating application.

While the number of baths in the surface treatment line 90 of the surface treatment process 4 can vary, the sequence of treatment stages remains consistent. The typical stage sequence follows one of these two patterns:
(1) Degreasing/Cleaning, Industrial Rinsing, Activation, Phosphating, Industrial Rinsing, Passivation, Deionized Rinsing; or
(2) Degreasing/Cleaning, Industrial Rinsing, Activation, Phosphating, Deionized Rinsing

In each stage of the surface treatment process 4, for example bath or tank, of the surface treatment line 90, specific parameters are maintained within predefined ranges to prevent surface defects. These ranges are established based on application engineering expertise and laboratory trials conducted prior to system deployment. The parameters influencing surface treatment quality of the surface treatment process 4 are classified according to their measurability:
(1) Real-time Measurable Parameters: These parameters are quantifiable through instantaneous methods, including sensors and process automation systems integrated within the production line. Data acquisition occurs continuously or at frequent intervals.
(2) Lab-Measurable Parameters: These parameters necessitate sample collection and subsequent laboratory analysis. Results are typically available after a period of days or weeks.
(3) Occasionally Measured Parameters: These parameters are assessed periodically, often during maintenance or tank cleaning procedures, rather than on a routine basis.
(4) Non-Measurable Parameters: These parameters are inherently difficult or impossible to quantify directly.

Table 1 below details exemplarily for the surface treatment process 4 measurable process parameters, including those monitored daily, weekly or monthly at different stages. Table 1 also specifies exemplarily the measurement methods (manual and/or automated) and the units of measurement.

**Table 1: Process parameters which can be captured at different stages**

| **Stage** | **Parameters** | **Way of measuring (manually)** | **Way of measuring (automatically)** |
|---|---|---|---|
| **Degrease** | Temperature | sensor | lineguard |
| **Degrease** | Total alkali | titration method | process analyzer |
| **Degrease** | Free alkali | titration method | process analyzer |
| **Degrease** | Oil content | Extraction method | NA |
| **Degrease** | pH | pH Electrode | lineguard |
| **Degrease** | Spray Pressure | Dial Gauge | lineguard |
| **Degrease** | Conductivity | Conductivity meter | lineguard |
| **Activation** | pH | pH Electrode | lineguard |
| **Phosphating** | Sludge content | manually | NA |
| **Phosphating** | Manganese | ICP (Inductivity coupled plasma) | NA |
| **Phosphating** | Nickel | ICP (Inductivity coupled plasma) | NA |
| **Phosphating** | Free acid | titration method | process analyzer |
| **Phosphating** | Total acid | titration method | process analyzer |
| **Phosphating** | Temperature | sensor | lineguard |
| **Phosphating** | Zinc | ICP (Inductivity coupled plasma) | NA |
| **Phosphating** | Coating weight | lab test - manually | NA |
| **Phosphating** | Gas Point | lab test - manually | process analyzer |
| **Passivation** | pH | pH Electrode | lineguard |
| **Rinsing** | Conductivity | conductivity meter | lineguard |
| **Rinsing** | pH | sensor/pH meter | lineguard |

For example, two methods may be employed capturing parameters of the surface treatment process 4:
(1) Manual Acquisition:
   Shift operators measure and record parameters at the beginning of each shift. During the shift, in the event of a defect occurrence, parameters are re-measured and recorded before any remedial action is taken. Based on pre-defined parameter ranges, corrective measures are implemented, which may include, but are not limited to, chemical additions, spray pressure adjustments, and bath temperature modifications. Following the corrective action, parameters are again measured and logged. Concurrently, the defect type and its root cause are captured and recorded.
(2) Automated Acquisition:
   Line guard systems or process analyzers may automatically capture parameters at pre-defined intervals (e.g., every minute or every five minutes). The acquired data may be transmitted to gateways located along the production line. A central gateway may consolidate the data from all plant gateways and may transmit it to cloud data storage systems via cloud APIs. Upon surface defect occurrence, the event is logged, including the time of occurrence. Following remediation, the root cause is determined and recorded. The precise time of the defect occurrence is critical for correlating parameters measured before, during, and after the defect.

In addition to process parameters, the capture of data specifically related to surface defect occurrences is may be provided. Surface defects may be meticulously logged, including:
(1) Process parameters measured immediately before corrective action;
(2) Process parameters measured after corrective action; and/or
(3) A detailed root cause analysis of the defect.

Surface defects may be categorized, as this categorization may influence the relevant parameters associated with occurrence of the surface defect. Exemplary surface defects include, but are not limited to:
a. Line Mark
b. Drip Mark
c. Dust
d. Flow Mark
e. Water Break
f. Blisters
g. E-coat droplets
h. Dry Oil Mark
i. Patchy Coating
j. Oil Oozing from Clinches Area
k. Foreign Contamination
l. Cloudy Coating
m. Craters
n. White Spots
o. Rough Finish
p. Black Dust

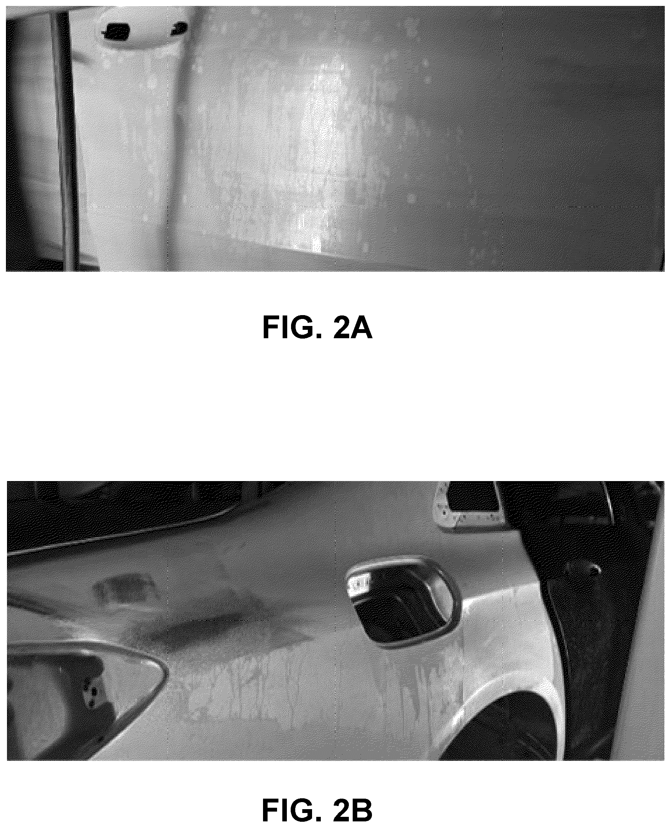

FIG. 2A and FIG. 2B show an example of a surface defect being a water break. The identified causes include, among others,
- Spray pressure low, in this case less than 0.8 bar,
- Dry oil incoming parts identified visually,
- Degrease temperature low, in this case less than 38°C,
- Degreasing with total low alkali acquired manually, in this case less than 20 ml,
- Improper surfactant addition acquired manually.
Remedies with regard to this water break were carried out after the water break occurred and were among others manual sanding, manual measurement of bath parameters and control, IOT, in this case auto measurement and adjustment of pressure, temperature and bath parameters.

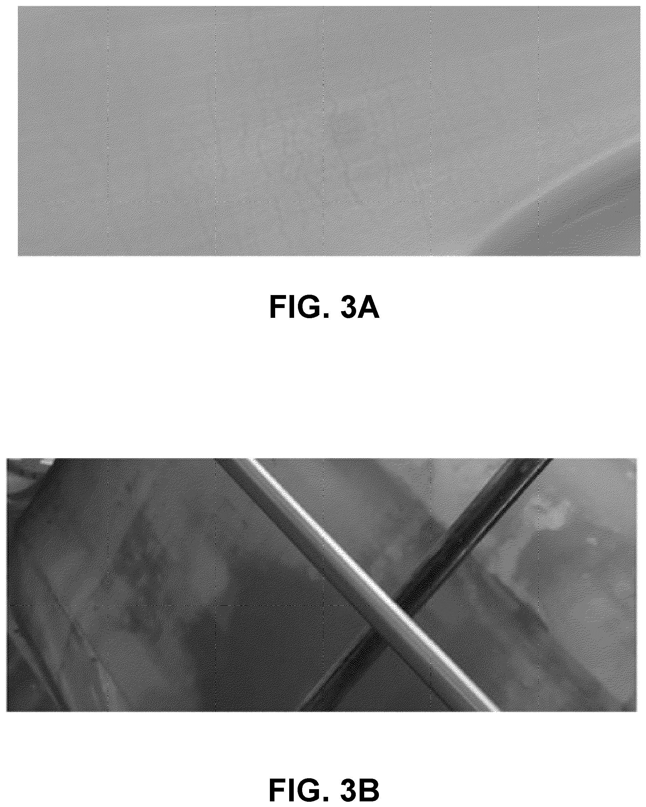

FIG. 3A and 3B show an example of a surface defect being an etch mark. The identified causes include, among others,
- pH value high, in this case above 10.0,
- Inadequate rinsing acquired visually,
- Bath temperature to high, in this case above 57°C,
- Contaminated process bath having a conductivity above 2500 µS (micro Siemens).
Remedies with regard to this etch mark were carried out after the etch mark occurred and were among others maintain bath pH as per the recommended range, regular monitoring and control of chemical concentration, proper rinsing between stages, IOT, which means in this case real time monitoring of bath parameters to ensure the process remains consistent and to minimize operator error.

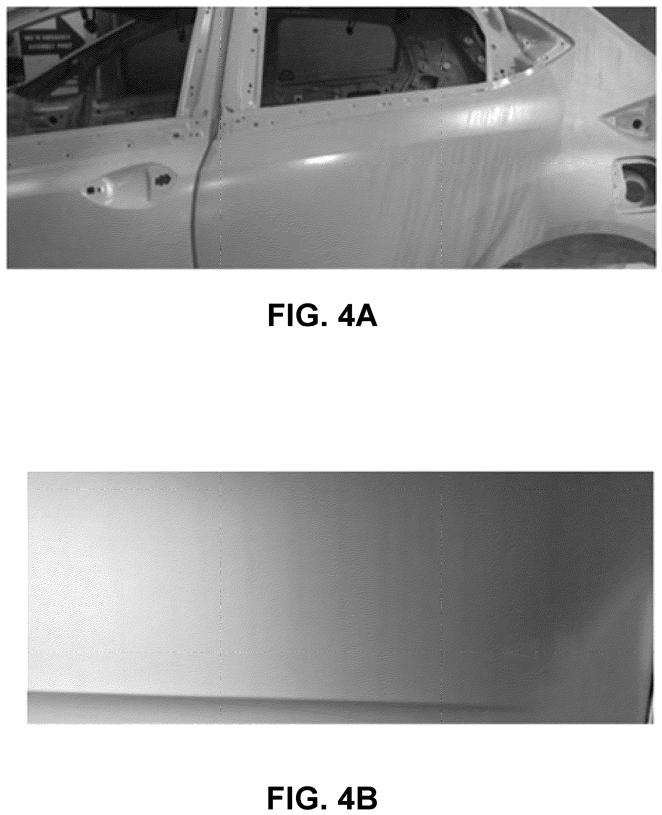

FIG. 4A and 4B show an example of a surface defect being flow marks. The identified causes include, among others,
- Degreasing at a low spray pressure, in this case less than 0.8 bar,
- Degrease circulation pump was off and alarm (red sign) was shown on PLC (Programmable Logic Controller),
- Conveyor stoppage for more than 5 minutes and alarm sign on PLC,
- Dry oil incoming parts acquired visually,
- Degrease temperature was low, in this case less than 38°C. Remedies with regard to this flow marks were carried out after this flow mark occurred and were among others increase spray pressure, monitoring the
conveyor by PLC, IOT, which means in this case real time monitoring of bath parameters.

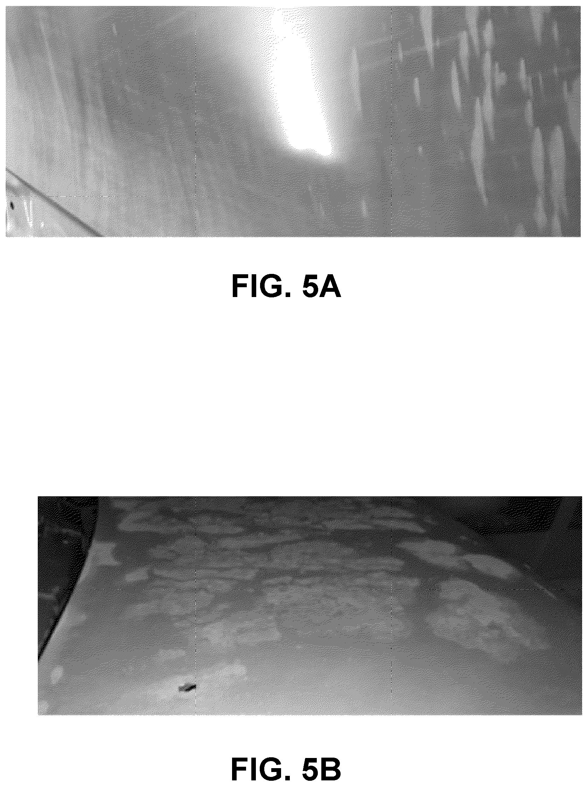

FIG. 5A and 5B show an example of a surface defect being a patchy appearance. The identified causes include, among others,
- Conveyor stoppage,
- Degrease spray temperature low, in this case less than 0.8 bar,
- High storage time of incoming parts acquired manually,
- Wrong oil applied on sheet metal acquired manually.
Remedies with regard to this patchy appearance were carried out after the patchy appearance appeared and were among others check all degrease spray pressure values and temperature values and maintain them within the specification, improve process to avoid high storage times, IOT, which means in this case measurement of bath parameters and data generation and analysis.

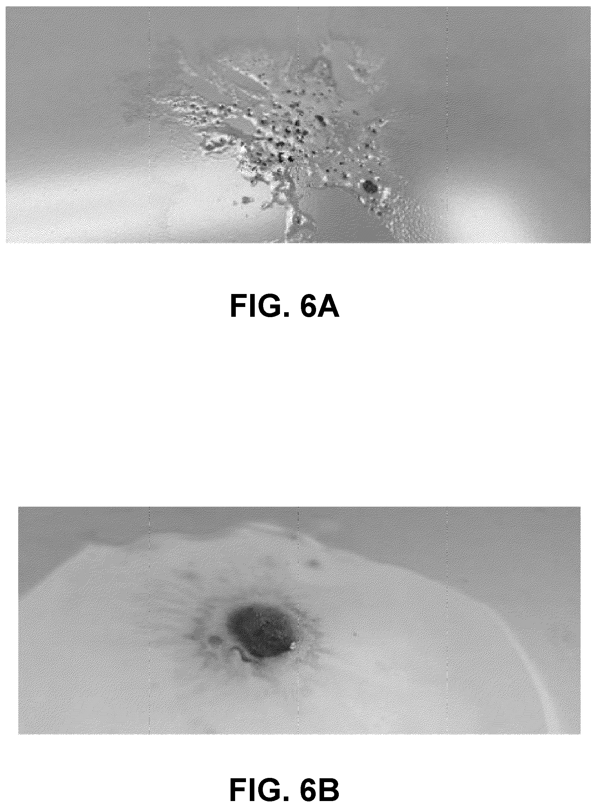

FIG. 6A and 6B show an example of a surface defect being oil spots. The identified causes include, among others,
- Leakage from conveyor tray acquired visually,
- Conveyor tray not cleaned as per schedule acquired visually,
- Over oiling for conveyor chain by untrained operator,
- Inadequate surface cleaning by untrained operator.
Remedies with regard to these oil spots were carried out after the oil spot occurred and were among others maintain regular maintenance and cleaning of conveyor, ensuring of effective cleaning and bathing, controlled handling and storage, inspection of cleaning after phosphating.

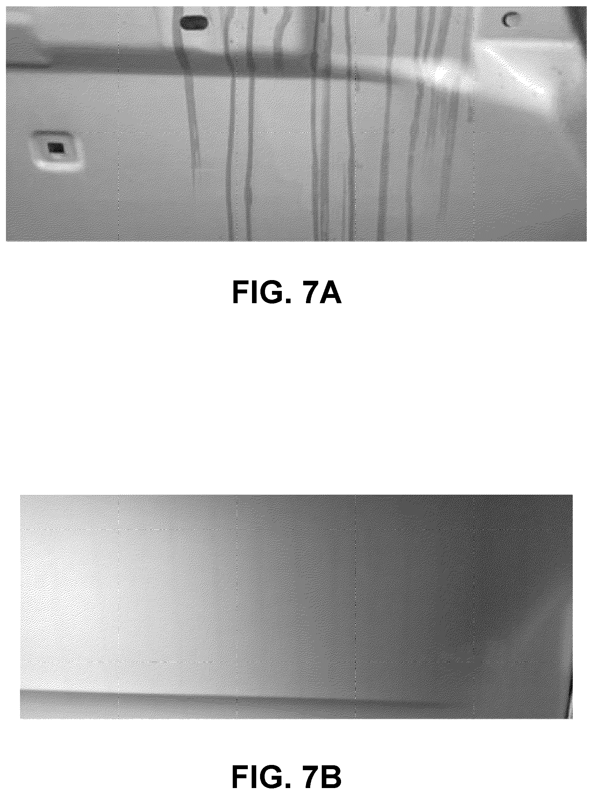

FIG. 7A and 7B show an example of a surface defect being dry oil patches. The identified causes include, among others,
- High storage time of incoming parts identified manually by records,
- Poor oil quality acquired manually by certificate of analysis,
- Logistic issue with regard to long lead time,
- Contaminated surface acquired manually.
Remedies with regard to these dry oil patches were carried out after the dry oil patches occurred and were among others sanding and/or buffing and pre-wiping on effected areas, replacement of old parts by fresh parts, quality control for incoming parts.

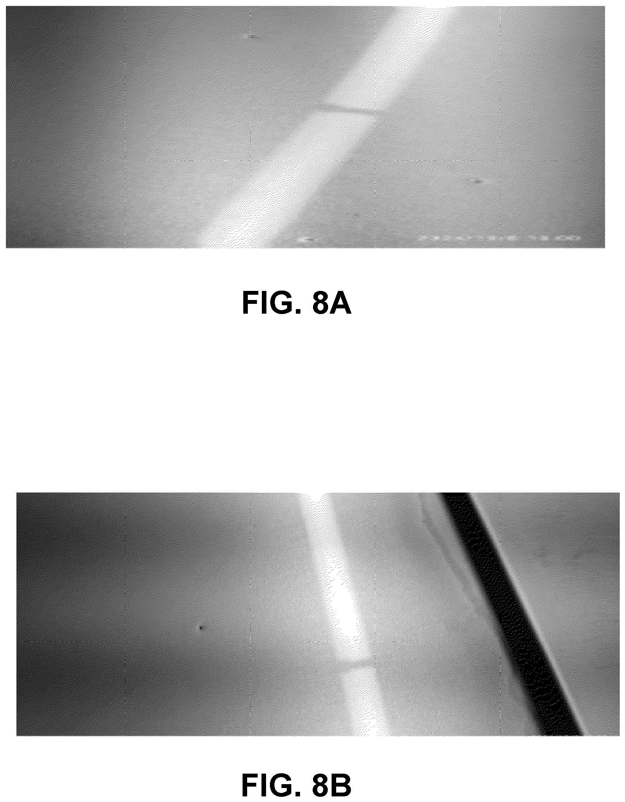

FIG. 8A and 8B show an example of a surface defect being black dust. The identified causes include, among others,
- Conveyor dust acquired manually,
- Insufficient cleaning by untrained operator,
- Old bath and improperly maintained bath acquired by cleaning records,
- Environmental contamination acquired by dust level per meter. Remedies with regard to this black dust were carried out after this black dust occurred and were among others ensure proper cleaning and degreasing, maintain chemical bath, identify source of the dust and eliminate, change air filters to minimize dust accumulation.

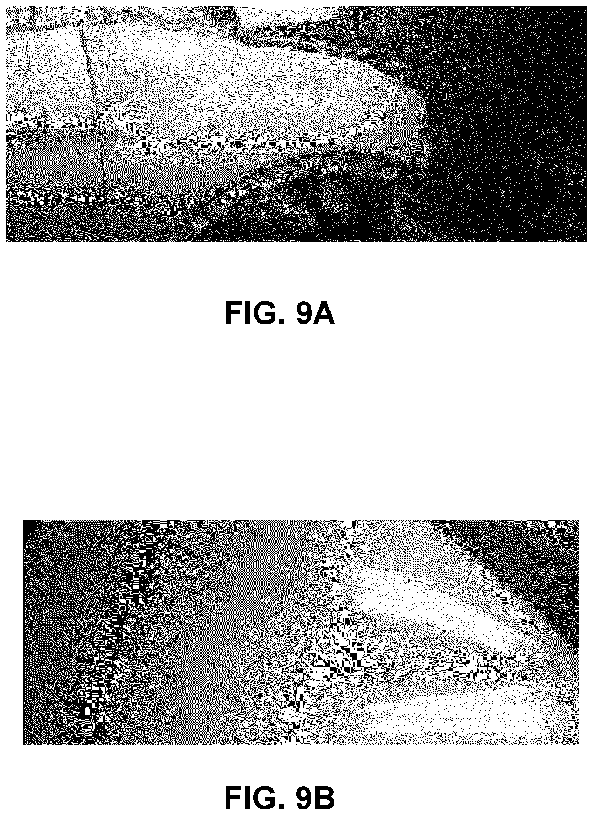

FIG. 9A and 9B show a surface defect being yellow patches. The identified causes include, among others,
- High phosphate free acid, in this case above 1.2 ml,
- Low accelerator value, in this case less than 1.5 ml,
- Conveyor stoppage for more than 5 minutes acquired manually,
- No circulation.
Remedies with regard to these yellow patches were carried out after these yellow patches occurred and were among others check all phosphate parameters and adjust them within specification, control conveyor PLC system, IOT, in this case real time monitoring of bath parameters.

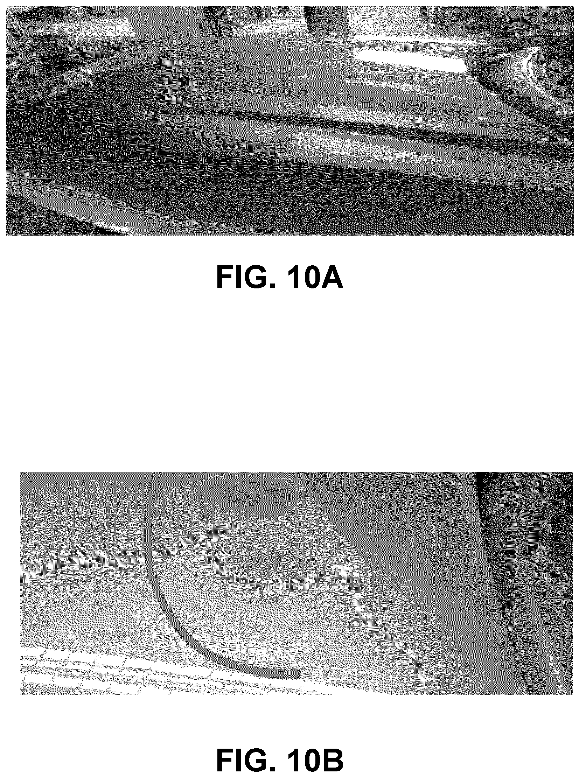

FIG. 10A and 10B show an example of a surface defect being a drip mark. The identified causes include, among others,
- Condensation of water vapor in acidic environment identified by alarm sign on PLC,
- Concentration of acid very high,
- Inadequate ventilation and exhaust system identified by alarm sign on PLC,
- High spray pressure, in this case above 1.5 bar.
Remedies with regard to this drip mark were carried out after this drip mark occurred and were among others improvement of ventilation and exhaust system, regular maintenance, sanding and repair of effected areas, IOT, in this case monitor and maintain water pressure.

In contrast to the conventional methods of analyzing occurred surface defects of surface treatment processes the method according to the disclosure is related to predicting the occurrence of a surface defect in a surface treatment process using a machine-learning model. For predicting the occurrence of a surface defect in a surface treatment process according to the disclosure one or more process parameters, which describe conditions during the surface treatment process, and/or one or more operation parameters, which describe the operation of the surface treatment process, are applied to the machine-learning model.

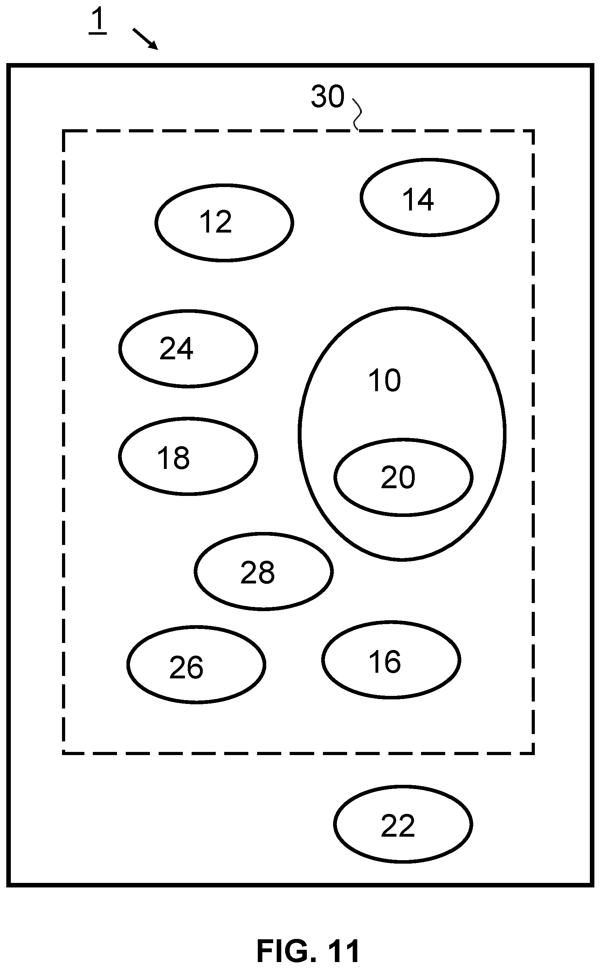

A device 1 for performing a method 40 of predicting an occurrence 43 of a surface defect 42 in a surface treatment process 44 as shown in FIG. 11 may include at least one processor 10, at least one user-interface 12, at least one input-module 14, at least one output-module 16, at least one storage 18, at least one machine-learning model 20, at least one external-data source 22, at least one reading-module 24 for reading computer readable mediums storing instructions, at least one program-module 26 for reading computer program products including instructions; and at least on alert-module 28. The at least one processor 10, the at least one user interface 12, the at least one input-module 14, the at least one output-module 16, the at least one storage 18, the at least one machine-learning model 20, the at least one external data-source 22, the at least one reading-module 24 for reading computer readable mediums storing instructions, the at least one program-module 26 for reading computer program products including instructions and the at least one alert-module 28 may be assembled together in a housing 30 but can alternatively be arranged beside each other without being assembled together in the housing 30. The housing 30 may be fixed to the ground but may alternatively be transportable, so that it can be easily transported from one place to another to be used at different places. All elements of the device 1 are connected to each other in a suitable and well-functioning manner, which is not shown in further detail. The at least one processor 10, the at least one user interface 12, the at least one input-module 14, the at least one output-module 16, the at least one storage 18, the at least one machine-learning model 20, the at least one external data-source 22, the at least one reading-module 24 for reading computer readable mediums storing instructions, the at least one program-module 26 for reading computer program products including instructions and the at least one alert-module may be connected with each other by a wired connection, which is not shown in further detail, but alternatively some or all of the elements of the device 1 may connected wireless in a suitable and well-functioning manner, which is not shown in further detail.

The processor 10 is designed in a well-functioning manner and may, for example, include at least one internal processor, an internal storage, a receiving-unit and an output-unit, which are all not shown in further detail.

In this embodiment the machine-learning model 20 is part of the processor 10. Alternatively the machine-learning model 20 may be provided separately from the processor 10 within the housing 30 or outside of the housing 30. The machine-learning model 20 is connected with the processor 10 in each case in a suitable and well-functioning manner, which may be by wires, which is not shown in further deatail, or wireless, which is also not shown in further detail.

The surface defect 42 may be one of the surface defects listed above and shown in FIGS. 2 to 10.

The surface treatment process 44 of FIG. 11 may be similar to the surface treatment process 4 shown in FIG. 1. Alternatively the surface treatment process 44 of FIG. 11 may be different from the surface treatment process 4 of FIG. 1. In case the surface treatment process 44 of FIG. 11 is different from the surface treatment process 4 of FIG. 1, the surface treatment process 44 of FIG. 11 may optionally include 14 stages according to Version 1 as shown in Table 2 below, 10 stages according to Version 2 as shown in Table 3 below or 10 stages according to Version 3 shown in Table 4 below:

**Table 2: Version 1 for surface treatment process 44**

| **Stage** | **Stage name** | **Application** | **Layout** |
|---|---|---|---|
| 1 | Pre Degrease 1 | Spray | Pre Degrease |
| 2 | Pre Degrease 2 | Dip | Pre Degrease |
| 3 | Degrease 1 | Spray | Degrease 1 |
| 4 | Degrease 2 | Dip | Degrease 2 |
| 5 | WR 1 | Spray | Water Rinse 1 |
| 6 | WR 2 | Dip | Water Rinse 2 |
| 7 | Activation | Dip | Activation |
| 8 | Zinc Phosphate | Dip | Phosphate |
| 9 | WR 3 | Dip | Water Rinse 3 |
| 10 | WR 4 | Spray | Water Rinse 4 |
| 11 | WR 5 | Spray | Water Rinse 5 |
| 12 | Passivation | Spray | Passivation |
| 13 | DM 1 | Dip | Demineralization 1 |
| 14 | DM 2 | Spray | Demineralization 2 |

**Table 3: Version 2 for surface treatment process 44**

| **Stage** | **Stage name** | **Application** | **Layout** |
|---|---|---|---|
| 1 | KOD | Spray | Knock-Off Degrease |
| 2 | Degrease 1 | Dip | Degrease 1 |
| 3 | Degrease 2 | Dip | Degrease 2 |
| 4 | WR 1 | Spray | Water Rinse 1 |
| 5 | Activation | Dip | Activation |
| 6 | Zinc Phosphate | Dip | Phosphate |
| 7 | WR 2 | Spray | Water Rinse 2 |
| 8 | WR 3 | Dip | Water Rinse 3 |
| 9 | DM 1 | Dip | Demineralization 1 |

**Table 4: Version 3 for surface treatment process 44**

| **Stage** | **Stage name** | **Application** | **Layout** |
|---|---|---|---|
| 1 | Hot Water | Spray | Hot Water |
| 2 | Degrease 1 | Dip | Degrease 1 |
| 3 | Degrease 2 | Dip | Degrease 2 |
| 4 | WR 1 | Spray | Water Rinse 1 |
| 5 | WR 2 | Spray | Water Rinse 2 |
| 6 | WR 3 | Spray | Water Rinse 3 |
| 7 | Thin Film | Dip | Thin Film |
| 8 | DI 1 | Spray | Deionization 1 |
| 9 | DI 2 | Spray | Deionization 2 |
| 10 | DI 3 | Spray | Deionization 3 |

It should be noted that while "WR" (Water Rinse), "DM" (Demineralization), and "DI" (Deionized Water) all represent water rinsing stages, the specific terminology used may vary.

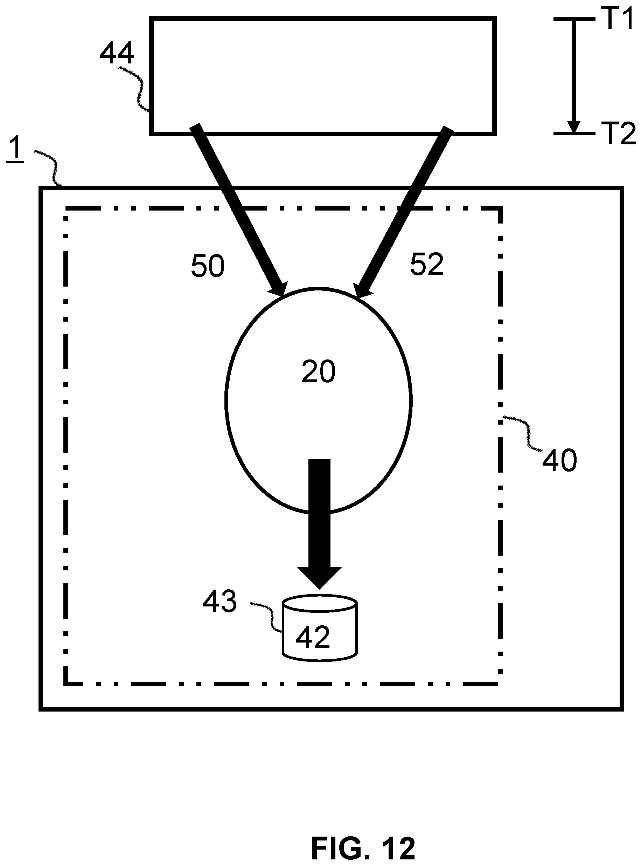

In case the device 1 for performing a method 40 of predicting an occurrence 43 of a surface defect 42 in the surface treatment process 44 is used to carry out the method 40 of predicting an occurrence 43 of a surface defect 42 in the surface treatment 44, the device 1 is connected in a suitable and well-functioning manner to the entities implementing the surface treatment process 44 as shown in FIG. 12. The connection between the device 1 and the entities implementing the surface treatment process 44 is not shown in further detail and may be, for example, by wires or wireless. In FIG. 12 only the machine-learning model 20 (which in this example is part of the not shown processor 10) of the device 1 is shown but it is to be understood that at least some of the other elements of the device 1 as shown in FIG. 11 are part of the device 1 according to FIG. 12.

The surface treatment process 44 starts for example at a time T1 and ends at a time T2. In other words, the surface treatment process 44 takes place during the time interval or time span defined by T1 and T2. "During the surface treatment process 44" is to be understood within the time interval or time span between T1 and T2. One or more process parameters 50 describing conditions during the surface treatment process 44 can be applied within the method 40 of predicting an occurrence 43 of a surface defect 42 in the surface treatment process 44 to the machine-learning model 20 of the device 1 according to FIG. 12. Alternatively or additionally one or more operation parameters 52 describing the operation of the surface treatment process 44 can be applied to the machine-learning model 20 according to FIG. 12.

An example for one or more process parameters 50 are the process parameters shown in Table 1 above. An example for one or more operation parameters are conveyor stoppage for more than 5 minutes, conveyor tray not cleaned as per schedule, leakage from conveyor tray, contamination, for example with dust, of the air surrounding the surface treatment process 44, temperature of the air surrounding the surface treatment process 44 at different stages, high storage time for incoming parts, wrong oil used, poor quality of oil used, and the like.

In this disclosure the term "process parameter" is used within the meaning of the type of the process parameter and its value. For example "Temperature = 10°C" is a "process parameter" within the meaning of this disclosure. A "process parameter" within the meaning of this disclosure may be alternatively a data point, including at least the type of the process parameter, value of the process parameter, time at which the process parameter was measured, stage of the surface process at which the process parameter was measured, layout of the stage of the surface process at which the process parameter was measured. For example, a "process parameter" within the meaning of this disclosure can be a data point like (Temperature // 42°C // 12:24 pm // Degrease 1 // Dip). "One or more process parameters" within the meaning of this disclosure may be further a matrix including at least two data points being process parameters within the meaning of this disclosure.

In this disclosure the term "operation parameter" is used within the meaning of the type of the operation parameter and its value. For example "Dust = 10mg/m³" is an "operation parameter" within the meaning of this disclosure. An "operation parameter" within the meaning of this disclosure may be alternatively a data point, including at least the type of the operation parameter, value of the operation parameter, time at which the operation parameter was measured, stage of the surface treatment process at which the operation parameter was measured, layout of the stage of the surface treatment process at which the operation parameter was measured. For example, an "operation parameter" within the meaning of this disclosure can be a data point like (Dust // 50mg/m³ // 01:04 pm // WR 1 // Spray).

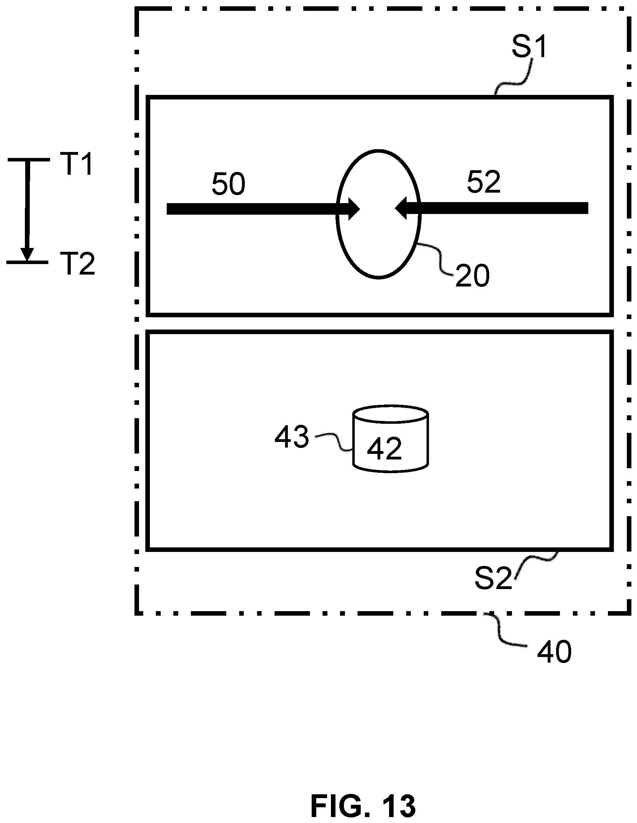

For performing the method 40 of predicting an occurrence 43 of a surface defect 42 in a surface treatment process 44 by the device 1 at least steps S1 and S2 according to FIG. 13 are performed by the processor 10 of the device 1.

In S1, the one or more process parameters 50 and/or the one or more operation parameters 52 are applied within the processor 10 (not shown in FIG. 13) to the machine-learning model 20 according to FIG. 13. By way of example, S1 includes three options: (1) only one or more process parameters 50 are applied to the machine-learning model 20, (2) one or more process parameters 50 and one or more operation parameters 52 are applied to the machine-learning model 20, (3) only one or more operation parameters 50 are applied to the machine-learning model 20.

The process parameters 50 describe conditions during the surface treatment process 44, which takes place in the time interval between T1 and T2. The one or more operation parameters 52 describe the operation of the surface treatment process 44.

In S2, the machine-learning model 20 predicts the occurrence 43 of the surface defect 42 in the surface treatment process 44.

Using the prediction of an occurrence 43 of the surface defect 42 in the surface treatment process 44 according to FIG. 13 may provide for enhanced quality control of the surfaces to be coated by using the prediction of an occurrence 43 of the surface defect 42 in the surface treatment process 44 to avoid surface defects before they occur.

A user of the device 1 may be informed about the prediction of an occurrence 43 of the surface defect 42 by the alert-module 28. This may be carried out for example such that the alert-module 28 sends an alert-message to the user and/or the alert-module 28 provides a corresponding alert-information to be shown on the user-interface 12 and/or a corresponding notification is sent from the alert-module to the external data source 22 and/or the alert-module 28 initiates an accoustic alarm to be produced by the output-module 16.

The prediction of the occurrence 43 of the surface defect 42 of the surface treatment process 44 may be used by the user to adjust parameters proactively in order to prevent further surface defects and thus significantly reduce productivity losses and financial expenditures.

In one embodiment of the disclosure the one or more process parameters 50 for the method 40 of predicting an occurrence 43 of a surface defect 42 in a surface treatment process 44 are captured during the surface treatment process 44, wherein the one or more process parameters 50 affect the surface defect 42. In other words, the one or more process parameters 50 are captured in the time interval or time span between T1 and T2, in which the surface treatment process 44 takes place. This is visualized in FIG. 13 by the arrow between T1 and T2. The one or more process parameters 50 which affect the surface defect 42 may be selected depending upon parameters which are known for influencing surface defects and/or may be selected upon parameters, which are not known for influencing surface defects. Capturing the one or more process parameters 50 during the surface treatment process 44 enables the machine-learning model 20 to predict the occurrence 43 of the surface defect 42 depending on the one or more process parameters 50 which affect the surface defect 42. As a result, particularly good predictions can be made by the machine-learning model 20 for the surface treatment process 44 with regard to occurrence 43 of the surface defect 42. These predictions may be used to avoid surface defects 42 before they occur when coating a surface using the surface treatment process 44.

For loT-based data acquisition or capturing of process parameters and operation parameters, data is typically collected at frequencies of once per minute or once per hour. This high-frequency collection rate results in a preponderance of non-defect data points and inherently produces time-series data. Therefore, in addition to the feature engineering process described elsewhere in this disclosure, the following supplementary steps may be provided to generate additional data points, thereby enhancing the predictive accuracy of defect detection.
(1) Hourly Data Acquisition:
   Where data is recorded hourly, the following transformations are applied to each parameter:
   a) Historical Data Inclusion:
      For each parameter, the values from the preceding six to ten hourly intervals are incorporated as individual data fields.
   b) Extrema Calculation:
      The minimum and maximum values observed across the preceding six hours are calculated and appended as distinct data fields for each parameter.
   c) Aggregation: The values for each parameter are aggregated over six-hour intervals, and these aggregated values are used as new data fields.
(2) Minute-by-Minute Data Acquisition:
   Where data is recorded every minute, the following transformations are applied to each parameter:
   a) Change-based and hourly sampling:
      For each parameter, data points are generated based on two criteria: (i) data points are included only when a change has occurred from the previous minute's reading; and (ii) one data point is selected from each hour. These selected data points are then incorporated as new data fields for each parameter.
   b) Extrema calculation
      The minimum and maximum values observed across the preceding hour are calculated and appended as distinct data fields for each parameter.
   c) Aggregation
      The values for each parameter are aggregated over one-hour intervals, and these aggregated values are used as new data fields. These supplementary data points are expected to improve the accuracy of defect prediction, particularly in scenarios involving high-frequency data collection, which results in a substantial volume of data accumulated daily. This approach addresses the challenges posed by imbalanced datasets where non-defect data significantly outweighs defect data.

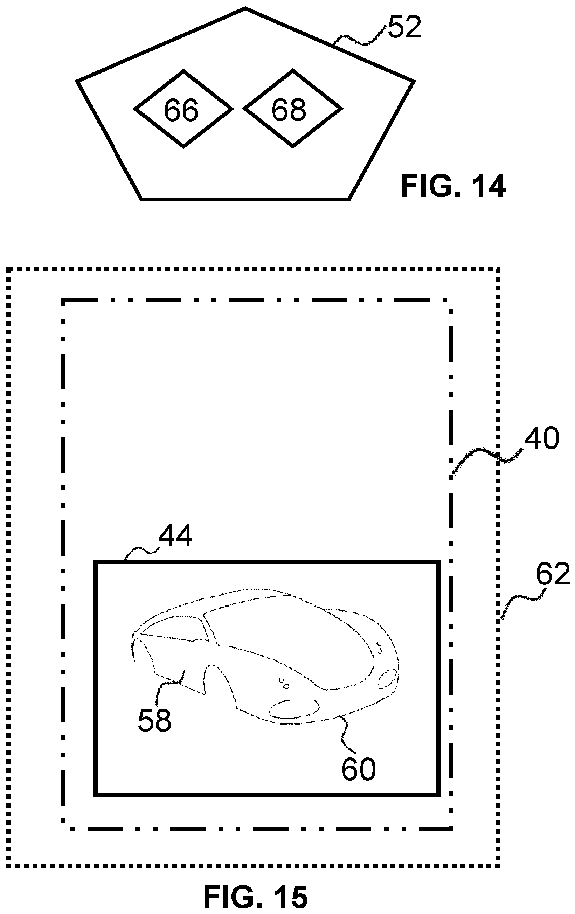

In another embodiment of the disclosure according to FIG. 14, the one or more operation parameters 52 may include one or more temperature parameters 66 and/or one or more humidity parameters 68. Linking the prediction of the occurrence 43 of the surface defect 42 with at least one temperature parameter 66 and/or at least one humidity parameter provides for enhanced reliability with regard to the prediction of the occurrence 43 of the surface defect 42 using the machine-learning model 20.

In another embodiment of the disclosure according to FIG. 15, the surface treatment process 44 is a process of coating a metal surface 58. Applying the method 40 of predicting an occurrence 43 of a surface defect 42 in a process of coating a metal surface 58 enables it to predict via the machine-learning model 20 for every metal surface 58 subjected to the surface treatment process 44 the occurrence 43 of the surface defect 42. In this case, the one or more process parameters 50 describing conditions during the metal coating process and/or the one or more process parameters 50 captured during the metal coating process and/or one or more operation parameters 52 describing the operation of the surface treatment process 44 are used by the machine-learning model 20 to predict the occurrence 43 of the surface defect 42. As a result, the prediction of the machine-learning model 20 for the occurrence 43 of the surface defect 42 can be linked to individual metal surfaces 58 and thus be used for managing the quality of the metal surfaces 58 which are coated in the surface treatment process 40 being a process of coating a metal surface 58.

In another embodiment of the disclosure according to FIG. 15, the surface treatment process 44 is a process of coating a metal surface 58 of a car body 60. In this case, the prediction of the machine-learning model 20 with regard to the occurrence 43 of the surface defect 42 in the process of coating a metal surface 58 can be used to manage the quality of the car bodies 60 which were subjected to the surface treatment process 44 being a process for coating the metal surface 58 of a car body 60. The car body 60 of FIG. 15 may be the vehicle body 91 of FIG. 1 in case the surface treatment process 44 of FIG. 13 is similar to the surface treatment process 4 of FIG. 1.

In another embodiment of the disclosure according to FIG. 15, the surface treatment process 44 is performed during a vehicle manufacturing process 62. As a result, the machine-learning model 20 provides, with the prediction of an occurrence 43 of the surface defect 42 of a metal surface 58 of a car body 60, an additional manufacturing information which can be used to classify with regard to further use the car bodies 60 being coated by the process of coating a metal surface 58 of a car body 60.

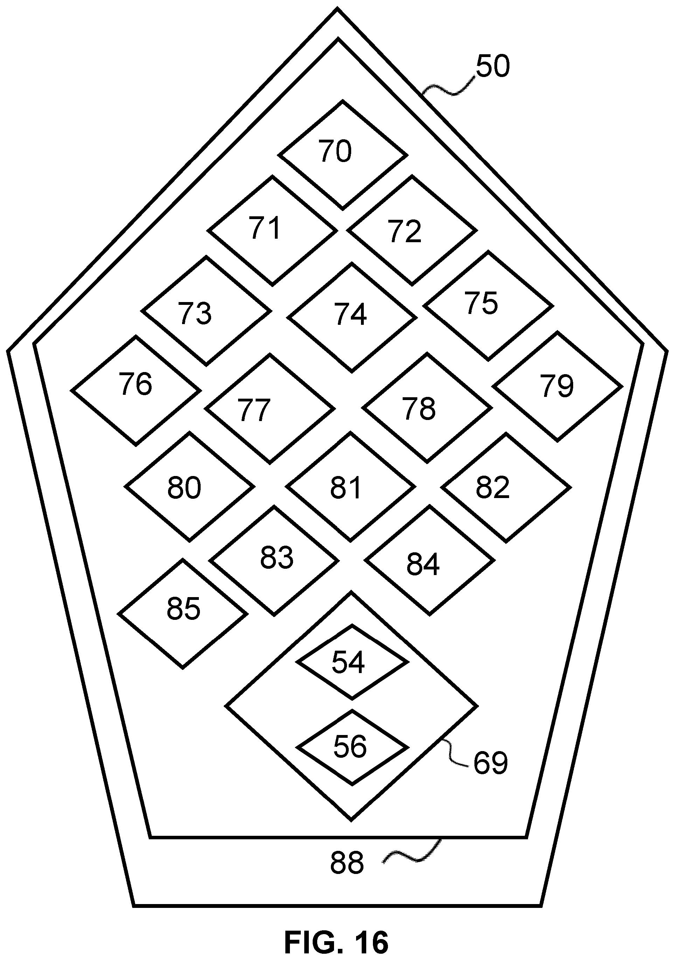

In another embodiment of the disclosure according to FIG. 16, the one or more process parameters 50 may include one or more environmental parameters 54 describing environmental conditions during the surface treatment process 44 and/or stage parameters 56A describing conditions at one or more stages of the surface treatment process 44. Environmental parameters 54 may be for example the temperature of the environment in which the surface treatment process 44 is performed or for example a specific gas composition in an environment in which the surface treatment is performed. Stage parameters describing conditions at one or more stages of the surface treatment process 44 may be for example performance of the conveyor, cleaning performance at one or more stages, quality of liquids used at one or more stages, quality of deionized water for rinsing at different stages. In this case, the one or more environmental parameters 54 describing environmental conditions during the surface treatment process 44 and/or stage parameters 56A describing conditions at one or more stages of the surface treatment process are used by the machine-learning model 20 to predict the occurrence 43 of the surface defect 42. As a result, the machine-learning model 20 even takes environmental parameters 54 describing environmental conditions and/or stage parameters 56A describing conditions at one or more stages of the surface treatment process 44 into account to predict the occurrence of the surface defect 42, which enhances the reliability of the prediction of the machine-learning model 20 with regard to the occurrence 43 of the surface defect 42.

In another embodiment of the disclosure for the one or more process parameters 50 according to FIG. 16, predefined ranges are determined. Predefining ranges for the one or more process parameters makes it particularly easy for the machine-learning model 20 to decide, whether a process parameter is within the predefined range. If a process parameter 50 is not within the predefined range an occurrence of the surface surface defect may be predicted by the machine-learning model. Alternatively or additionally, the machine-learning model 20 may provide a user with an occording information about a process parameter 50 not being in a predefined range and thus leaves it to the user, how to proceed with the surface treatment process 44. Providing the machine-learning model 20 additonally with predefined ranges for the one or more process parameters 50 enables to predict by using the machine-learning model 20 the occurrence 43 of the surface defect 42 very quickly and effectively and thus providing enhanced reliability with regard to the prediction of the occurrence 43 of the surface defect 42 using the machine-learning model 20.

By way of example, prior to system deployment, permissible ranges for each process parameter are established based on application engineering expertise and laboratory trials. Upon each log-in of a process parameter 50 into the machine-learning model 20, the logged process parameter 50 is compared against the pre-configured permissible range. If the logged process parameter 50 falls outside the defined range, a warning alert may be generated for the respective process parameter. for example by using the alert-module 28 of the device 1 according to FIG. 11. This alert may include information regarding the process parameter's permissible range and will be transmitted to the user, for example accoustically by the output-module 18 and/or visually by the unser-interface 12 and/or as a message provided to the user by the external data source 22.

By way of example, in case all process parameter 50 remain within their pre-configured permissible ranges, the machine-learning model 20 may be invoked to predict occurrences of surface defects. If the machine-learning model 20 indicates a prediction that a surface defect will occur, an alert may be generated. This alert may include the decision path utilized by the machine-learning model 20 and the associated thresholds of the process parameters 50.

By way of example, in the event that one or more process parameter 50 fall outside their pre-configured permissible ranges, and machine-learning model 20 simultaneously returns a "Surface Defect Positive" prediction, a combined alert may be generated. This alert may provide both the information regarding the out-of-range process parameter(s), including their permissible ranges, and the surface defect prediction information, including the machine-learning model's 20 decision path and thresholds of the process parameters 50.

In another embodiment of the disclosure according to FIG. 16, the one or more process parameters 50 are parameters 69 affecting the coating adhesion of the coating of the metal surface 58. Parameters 69 affecting the coating adhesion of the coating of the metal surface 58 may be for example stage parameters 56 describing conditions at one or more stages of the surface treatment process 44 and one or more environmental parameters 54. Taking into account parameters affecting the coating adhesion of the coating of the metal surface 58 by the machine-learning model 20 when predicting the occurrence 43 of the surface defect 42 may provide for a connection between the predicted occurrence 43 of the surface defect and the parameters 69 affecting the coating of the metal surface 58 which can be used for quality management of the metal surfaces 58 to be coated.

In another embodiment of the disclosure, the one or more process parameters 50 include according to FIG. 16 one or more process parameters selected from a group of process parameters including or consisting of:
- a concentration of free acid in a treatment solution 70 used in the surface treatment process 44;
- a concentration of total acid in a treatment solution 71 used in the surface treatment process 44;
- a concentration of free alkali in a treatment solution 72 used in the surface treatment process 44;
- a concentration of total alkali in a treatment solution 73 used in the surface treatment process 44;
- a temperature of the environment 74 in which the surface treatment process 44 is performed;
- an amount of oil in a treatment solution 75 used in the surface treatment process 44;
- an acidity or alkalinity of a treatment solution 76 used in the surface treatment process 44;
- a specific gas composition in an environment 77 in which the surface treatment process 44 is performed;
- a gas point 78 used in the surface treatment process 44;
- an amount of sludge in a treatment solution 79 used in the surface treatment process 44;
- a conductivity of a treatment solution 80 used in the surface treatment process 44;
- a pressure at which a spray coating is applied 81 in the surface treatment process 44;
- a concentration of Manganese in a treatment solution 82 used in the surface treatment process 44;
- a concentration of Nickel in a treatment solution 83 used in the surface treatment process 44;
- a concentration of Zinc in a treatment solution 84 used in the surface treatment process 44; and
- a weight of a coating deposited 85 in the surface treatment process 44.

The above listed process parameters are parameters that focus on both environmental and treatment factors critical to predict surface defects 42 in surface treatment processes like the surface treatment process 44, in particular automotive surface treatment processes.

For example, the concentration of free acid in a treatment solution 70 and/or the concentration of total acid in a treatment solution 71 used in the surface treatment process 44 may affect the occurrence of a surface defect in a surface to be coated by the surface treatment process 44.

Further for example, a concentration of free alkali in a treatment solution 72 used in the surface treatment process 44 and/or a a concentration of total alkali in a treatment solution 73 used in the surface treatment process 44 may influence the chemical balance in the surface treatment process 44.

Further for example, a temperature of the environment 74 in which the surface treatment process 44 is performed may significantly impact the quality of the result of the surface treatment process 44 and thus can significantly influcence the occurrence 43 of the surface defect 42.

Further, by way of example, an amount of oil in a treatment solution 75 used in the surface treatment process 44 may influence coating adhesion of the surface treatment process 44.

Further, by way of example, an acidity or alkalinity of a treatment solution 76 used in the surface treatment process 44 may have a high impact on optimal chemical reactions during the surface treatment process 44. An acidity or alkalinity of a treatment solution 76 may be reflected by a pH-value of the treatment solution.

Further, by way of example, a specific gas composition in an environment 77 in which the surface treatment process 44 is performed may influence coating adhesion of the surface treatment process 44.

Further, by way of example, a gas point 78 used in the surface treatment process 44, which can be the gas composition in the environment, may have a high impact on the surface treatment process 44 and thus influence the quality of the surface subjected to the surface treatment process 44.

Further, by way of example, the sludge content, which can be an amount of sludge in a treatment solution 79 used in the surface treatment process 44 may interfere with coating adhesion and thus may have a high impact on the quality of the surface subjected to the surface treatment process 44.

Further, by way of example, a conductivity of a treatment solution 80 used in the surface treatment process 44 may indicate the ionic content of the solution and thus effecting chemical properties and interactions during the surface treatment process 44.

Further, by way ofexample, a pressure at which a spray coating is applied 81 in the surface treatment process 44 may influence the uniformity and adhesion quality of the surface treatment process 44.

Further, by way of example, a concentration of Manganese in a treatment solution 82 used in the surface treatment process 44 and/or a concentration of Nickel in a treatment solution 83 used in the surface treatment process 44 and/or a concentration of Zinc in a treatment solution 84 used in the surface treatment process 44 may influence the coating adhesion of the surface treatment process significantly.

Further, by way of example, a weight of a coating deposited 85 in the surface treatment process 44 may influence the thickness of the coating applied to the surface subjected to the surface treatment process 44.

In case the one or more process parameters 50 include according to FIG. 16 one or more process parameters selected from a group of process parameters as listed above are used for the method 40 of predicting the occurrence 43 of the surface defect 42 by using the machine-learning model 20 the prediction provided by the machine learning model 20 has a high quality and may be used for the quality management of surfaces subjected to the surface treatment process 44.

In another embodiment of the disclosure according to FIG. 16, the one or more process parameters 50 are parameters 88 that directly or indirectly influence surface defect formation during the surface treatment process 44. Providing parameters 88 that directly or indirectly influence surface defect formation during the surface treatment process 44 and applying them to the machine-learning model 20 provides enhanced reliability with regard to the prediction of occurrrence 43 of the surface defect 42 in the surface treatment process 44 using the machine-learning model 20.

In another embodiment of the disclosure, the surface defect 42 is a visually detectable surface defect occurring in the surface treatment process 44. Using the machine-learning model 20 for predicting visually detectably surface defects as the surface defect 42 occurring in the surface treatment process 44 provides for enhanced quality management with regard to the surfaces to be coated by the surface treatment process 44. The visual surface defect may be a surface defect as shown in FIGS. 2 to 10 and as described above.

In another embodiment of the disclosure, the surface defect 42 is a water break defect occurring in the surface treatment process 44. Using the machine-learning model 20 for predicting water break defects as the surface defect 42 occurring in the surface treatment process 44 provides for further enhanced quality management with regard to the surfaces to be coated by the surface treatment process 44.

In another embodiment of the disclosure, the machine-learning model 20 includes one or more decision tree models. A machine-learning model 20 that includes one or more decision tree models may provide for extracting the decision path and thus enhancing interpretability.

For example, selecting a machine-learning model like the machine-learning model 20 for the classification task of water break defect prediction interpretability of the results may be a requirement for actionable insights. Therefore, a machine-learning model including one or more decision trees can be chosen for its inherent explaining, facilitating the extractions of decision rules and paths. The performance of such a machine-learning model may be assessed using metrics like accuracy, recall, precision and confusion.

A strength of a machine-learning model including one or more decision trees lies in its inherent interpretability. Unlike "black box" models, it offers transparent decision-making, crucial for understanding *why* a prediction is made and building trust. Its hierarchical structure-nodes representing features, branches representing decision rules, and leaves representing outcomes-allows tracing the path from root to leaf, revealing the feature combinations driving each prediction. Scikit-learn facilitates extracting these decision paths, explicitly identifying classification rules. For example, a rule might reveal that a defect is predicted when pressure exceeds a threshold and temperature falls below another. This transparency empowers domain experts to understand and act upon these rules, informing preventative maintenance. This ability to pinpoint influential factors and enable targeted interventions is for example invaluable for water break defect prediction. The need for explicit rule extraction and feature importance understanding may result in chosing a machine-learning model including one or more decision trees.

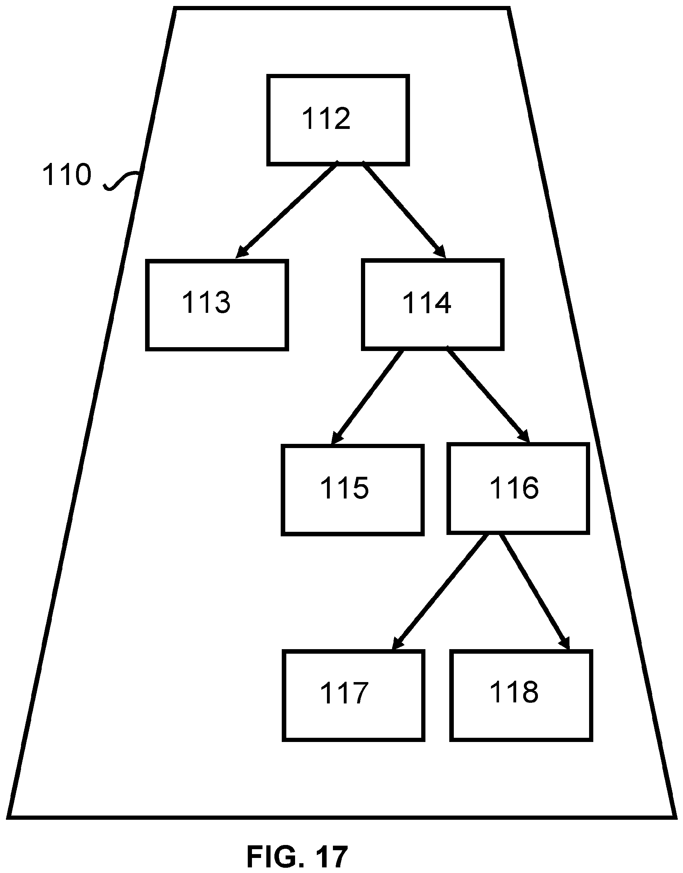

The graph according to FIG. 17 depicts an example of a hierarchical structure of a decision tree 110 of a machine-learning model 20 being part of (in other words implemented by) the device 1 according to FIG. 11. The decision tree 110 includes for example several nodes 112, 113, 114, 115, 116, 117, 118. The decision tree 110 may include more and even many more nodes than shown in FIG. 17, but for reasons of clarity only these nodes are shown. Each node 112, 113, 114, 115, 116, 117, 118 represents a query of a data point 50i of one or more process parameters 50 being a first matrix M_{A}(50) and guides the matrix M_{A}(50) down the decsision tree 110. Node 112 is the root node and the leaf nodes 115, 118 at the very bottom of the decision tree 110 represent the final prediction.

An example for one or more process parameters 50 being a first matrix M_{A}(50) including data points 50i of process parameters 50 is shown in Table 5:

**Table 5: One or more process parameters being a first matrix M_{A}(50)**

| **Stage name** | **Application** | **Process parameter** | **Value** |
|---|---|---|---|
| Phosphating | Dip 1 | Total acid | 19.1 |
| Degrease | Dip 1 | Total alkali | 21.7 |
| Degrease | Dip 2 | Temperature | 42.3 |
| RCDM | PT 1 | pH | 6.5 |
| Activation | Dip 1 | pH | 9.3 |
| Degrease | Dip 2 | Total Alkali | 22.5 |
| Rinse | Water 1 | pH | 6.0 |
| Degrease | Dip 1 | Temperature | 42.9 |
| Phosphating | Dip 1 | Temperature | 40.7 |
| Knock-Off Degrease | Spray 1 | Temperature | 41.7 |
| Phosphating | Dip 1 | Gas Point | 4.3 |
| Phosphating | Dip 1 | Sludge Content | 1.2 |
| RCDM | Phosphating 1 | Conductivity | 29.0 |
| Knock-Off Degrease | Spray 1 | Pressure | 1.1 |
| Knock-Off Degrease | Spray 1 | Total Alkali | 21.3 |

The decision path for one or more process parameters 50 being the first matrix M_{A}(50) can be traced through the decision tree 110 as follows:
The decision tree 110 starts at the root node 112 with a check on "pressure". If the query is
KNOCK-OFF DEGREASE - SPRAY 1 - PRESSURE > 0.85 bar
the path moves down the right branch to the node 114, because the corresponding data point 50i of the matrix M(50) is (Knock-Off Degrease // Spray 1 // Pressure // 1.1). In case the value for that data point 50i would have been 0.5, the path would have moved to the left branch to the node 113.

Node 114 might check "Total Alkali". If the query is
KNOCK-OFF DEGREASE-SPRAY 1-TOTAL ALKALI < 23.55 ml
the path moves down the right branch to node 116 because the according data point 50i of the matrix M(50) is (Knock-Off Degrease // Spray 1 // Total Alkali // 21.3). In case the value for that data point 50i would have been 24.5, the path would have moved to the left branch to the node 115.

Node 116 might check "temperature". If the query is
DEGREASE-DIP 1-TEMPERATURE > 20.8°C
the path moves down to the right branch to the leaf node 118 predicting "water break" as surface defect because the according data point 50i of the matrix M(50) is (Degrease // Dip 1 // Temperature // 42.3). In case the value for that data point 50i would have been 14.1, the path would have moved to the left branch to the node 117.

Therefore, based on the one or more process parameters being a first matrix M_{A}(50), the decision tree 110 predicts a water break as the surface defect 42.

Another example for one or more process parameters 50 being a second matrix Ms(50) including data points 50i of process parameters 50 is shown in Table 6:

**Table 6: One or more process parameters being a matrix Ms(50)**

| **Stage name** | **Application** | **Process parameter** | **Value** |
|---|---|---|---|
| Phosphating | Dip 1 | Total acid | 19,0 |
| Degrease | Dip 1 | Total alkali | 22,9 |
| Degrease | Dip 2 | Temperature | 41,8 |
| RCDM | PT 1 | pH | 8,9 |
| Activation | Dip 1 | pH | 9,3 |
| Degrease | Dip 2 | Total Alkali | 22,1 |
| Rinse | Water 1 | pH | 5,9 |
| Degrease | Dip 1 | Temperature | 42,2 |
| Phosphating | Dip 1 | Temperature | 40,4 |
| Knock-Off Degrease | Spray 1 | Temperature | 42,0 |
| Phosphating | Dip 1 | Gas Point | 4,1 |
| Phosphating | Dip 1 | Sludge Content | 1,0 |
| RCDM | Phosphating 1 | Conductivity | 33,0 |
| Knock-Off Degrease | Spray 1 | Pressure | 1,1 |
| Knock-Off Degrease | Spray 1 | Total Alkali | 27,8 |

The decision path for one or more process parameters 50 being the second matrix Ms(50) can be traced through the decision tree 110 as follows:

The decision tree 110 starts at the root node 112 with a check on "pressure". If the query is
KNOCK-OFF DEGREASE - SPRAY 1 - PRESSURE > 0.85 bar
the path moves down the right branch to the node 114, because the corresponding data point 50i of the matrix Ms(50) is (Knock-Off Degrease // Spray 1 // Pressure // 1.1). In case the value for that data point 50i would have been 0.5, the path would have moved to the left branch to the node 113.

Node 114 might check "Total Alkali". If the query is
KNOCK-OFF DEGREASE-SPRAY 1-TOTAL ALKALI < 23.55 ml
the path moves down the left branch to node 115 because the according data point 50i of the matrix Ms(50) is (Knock-Off Degrease // Spray 1 // Total Alkali // 27.8). In case the value for that data point 50i would have been 20.5, the path would have moved to the right branch to the node 116. Node 115 is a leaf node predicting "no water break" and thus no surface defect.

Therefore, based on the specific combination of the process parameters 50 according to the first matrix M_{A}(50), the decision tree 110 predicts a water break as the surface defect 42. Based on the specific combination of the process parameters 50 according to the second matrix Ms(50) the decision tree 110 predicts no water break as the surface defect 42.

By examining numerous decision paths like this, comprehensive understanding of how the machine-learning model arrives at its predictions can be gained and the most influential factors contributing to water break defects can be identified. This information is helpful for developing targeted maintenance strategies and improving the overall reliability of the use of the machine-learning model 20.

In another embodiment of this disclosure, the machine-learning model 20 includes a random forest classifier to predict the occurrence 43 of the surface defect 42 in the surface treatment process 44. A machine-learning model 20 that includes a random forest classifier to predict the occurrence 43 of the surface defect 42 in the surface treatment process 44 may provide for a high level of reliable interpretability of the result. The performance of such a machine-learning model 20 may be assessed using metrics like accuracy, recall, precision and confusion.

In another embodiment of this disclosure, the method 40 of predicting an occurrence of a surface defect 42 in a surface treatment process 44 is performed by a processor like the processor 10 of the device 1 according to FIG. 11.

Another embodiment of the disclosure is a method 46 of controlling 48 a surface treatment process 44 according to FIG: 18. The method 46 may include (1) performing a method 40 of predicting an occurrence 43 of a surface defect 42 in the surface treatment process 44 according to any of the embodiments listed above and (2) controlling the surface treatment process 44 using the result of predicting the occurrence 43 of the surface defect 42 in the surface treatment process 44. Thus, the method 46 of controlling 48 a surface treatment process 44 includes performing the method 40 of predicting an occurrence 43 of a surface defect 42 in the surface treatment process 44 with S1 and S2 and additionally S3. In S3, controlling 48 is performed. Controlling 48 may be performed for example by transferring one or more of the one or more the process parameters 50 to one or more adjusted process parameters 50A and/or by transferring one or more of the one or more operation parameters 52 to one or more adjusted operation parameters 52A for the surface treatment process 44A followed by that surface treatment process 44, for which the method 40 predicted the occurrence of a surface defect 42 using the machine-learning model 20. Using the method 46 of controlling 48 a surface treatment process 44 according to FIG: 18 may provide for reducing surface defects 42 in the surfaces to be coated by several surface treatment processes, each of which corresponds to a surface treatment process 44. The various surface treatment processes may differ from each other with regard to the adjusted one or more process parameters 50A and/or the adjusted one or more operation parameters 52A.

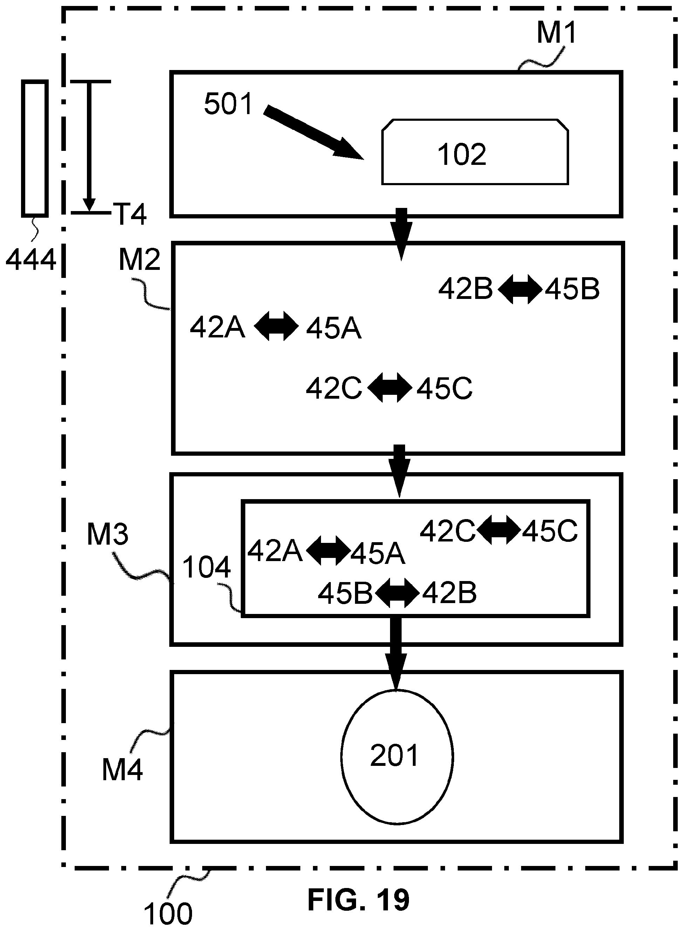

Another embodiment of this disclosure is a method 100 of training a machine-learning model 201 as shown in FIG. 19. The machine-learning model 201 may be the same as the machine-learning model 20 but may also be different. The method 100 may include (1) collecting basic data 102 including process parameters 501 during a surface treatment process 444; (2) determining one or more surface defects 42A, 42B, 42C of the surface treatment process 444 and an associated cause 45A, 45B, 45C for each surface defect 42A, 42B, 42C; (3) storing the basic data 102 and the one or more surface defects 42A, 42B, 42C and the associated causes 45A, 45B, 45C for the surface defects 42A, 42B, 42C as training data 104; and (4) training the machine-learning model 201 using the stored training data 104. The surface treatment process 444 may be similar to the surface treatment process 44 described above or alternatively the surface treatment process 444 may be different from the surface treatment process 44 described above.

The method 100 of training a machine-learning model 20 may include at least the steps M1, M2, M3 and M4 as shown in FIG. 19. In M1, a surface treatment process 444 is performed during a time interval or time span lasting from a time T3 to time T4. T3 may be different but also may be similar to T1 as described above. T4 may be similar but also may be different to T2 as described above. The surface treatment process 444 may be similar to the surface treatment process 44 but may also be different from the surface treatment process 44 as described above. basic data 102 are collected, which include one or more process parameters 501 during the surface treatment process 444. The one or more process parameters 501 may be similar to the one or more process parameters 50 but may be also different to the one or more process parameters 50 as described above.

The basic data 102 may not include parameters which are measured infrequently, for example "sludge content" only measured during bath changes, for example "Zinc", "Manganese", and or "Nickel" only tested weekly. The basic data may not include further parameters, which have low likelihood of surface defect causation, for example parameters deemed unlikely to contribute to surface defects. The basic data may also not include non-measurable parameters, for example parameters influencing the surface defects but not being currently measurable like "improper surfactant addition" or "dry oil incoming parts".

In M2, one or more surface defects 42A, 42B, 42C are determined and their associated cause 45A, 45B, 45C. For reasons of clarity, only three surface defects 42A, 42B, 42C and their associated causes 45A, 45B, 45C are shown. It shall be understood, that the number of surface defects 42A, 42B, 42C and their associated causes 45A, 45B, 45C can be larger, even much larger than three or even smaller than three. The determination of the surface defects 42A, 42B, 42C and their associated causes 45A, 45B, 45C may be based on the collected basic data 102 including one or more process parameters 501. In M3, the one ore more surface defects 42A, 42B, 42C and their associated causes 45A, 45B, 45C are stored as training data 104.

In M4, the machine-learning model 201 is trained using the stored training data 104. Training a machine-learning model 201 results in a trained machine-learning model, which can be used as machine-learning model in the above described method of predicting an occurrence 43 of a surface defefct 42 in a surface treatment process 44. Using a trained machine-learning model as machine-learning model 20 in the method 40 of predicting an occurrence 43 of a surface defect 42 in a surface treatment process 44 results in enhanced predictions with regard to the occurrence 43 of the surface defect 42. The level of enhancement to be achieved may be also but not only be based on the quality of the trained machine-learning model.

In one embodiment of the disclosure the method 100 of training a machine-learning model 201 may further include (5) performing feature engineering 105 by analyzing the collected basic data 102 including one or more process parameters 501 and incorporating domain expert knowledge 106 derived from a root cause analyses to identify a set of features 107 indicative of the one or more surface defects 42A, 42B, 42B and the associated causes 45A, 45B, 45C.

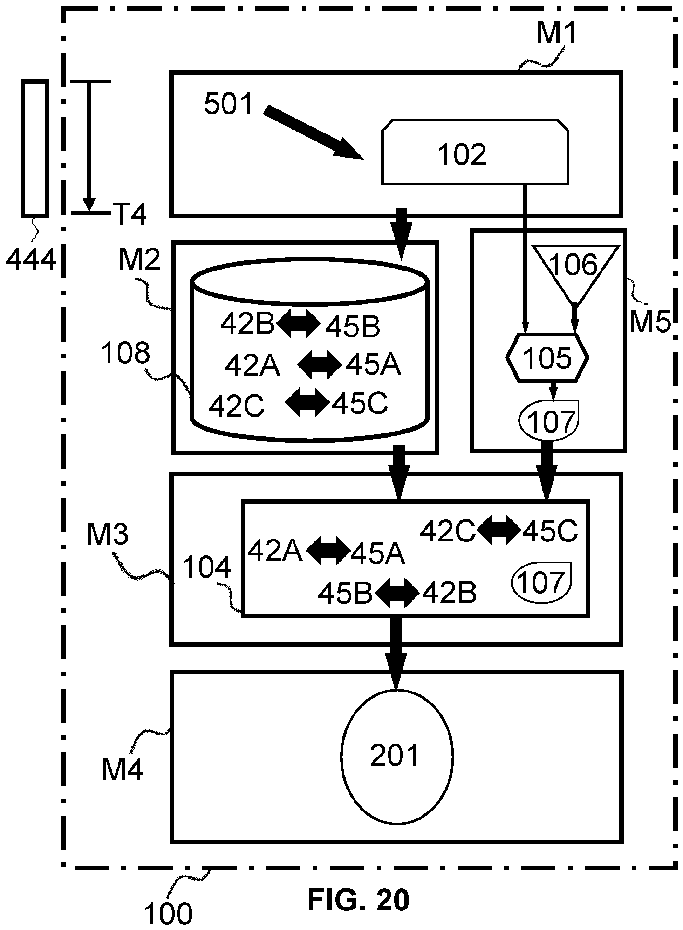

For this, the method 100 of training a machine-learning model additionally includes M5 according to FIG. 20. In M5, feature engineering 105 may be performed by analyzing the collected basic data 102, which includes one or more process parameters 501, and incorporating domain expert knowledge, which may be derived from a root cause analyses. The result of the feature engineering 105 may be a set of features 107, which is indicative of the one or more surface defects 42A, 42B, 42C and their associated causes 45A, 45B, 45C. This set of features 107 can be used to develop other surface treatment processes, which may differ significantly from the surface treatment process 444 in order to avoid in another way surface defects during a surface treatment process.

In another embodiment of the disclosure, the stored training data 104 include the set of features 107 indicative of the one or more surface defect 42A, 42B, 42C and the associated causes 45A, 45B, 45C according to FIG. 20. The set of features 107 may contribute to reduce the time needed for training the machine-learning model 201 in order to produce reliable results.

In another embodiment of this disclosure, the one or more surface defect 42A, 42B, 42C and the associated causes 45A, 45B, 45C are stored into a defect database 108 according to FIG. 20. Storing the the one or more surface defect 42A, 42B, 42C occurrences 43A, 43B, 43C and the associated causes 45A, 45B, 45C for the surface defects 42A, 42B, 42C into a defect database 108 provides for using them not only for training the machine-learning model 201 but alternatively, for example, for further development of surface treatment processes.

The method 100 of training a machine-learning model 201 may be carried out in the device 1 according to FIG. 11 by using the processor 10 of the device 1 and training the machine-learning model 20 of the device as machine-learning model 201. The storage (memory) 18 of the device 1 may be used as defect data base 108 for storing the one or more surface defects 42A, 42B, 42C and the associated causes 45A, 45B, 45C. Alternatively a storage (memory) of the processeor 10 may be used as defect data base 108 or a storage (memory) of the machine-learning model 20 to store the one or more surface defects 42A, 42B, 42C and the associated causes 45A, 45B, 45C. Alternatively, the method 100 of training a machine-learning model 201 may be carried out on another device, which is not shown, being connected to a surface treatment process 444 and having at least a processor and a storage.

In the following with regard to a surface defect 42 being a waterbreak defect it is exemplarily shown how training data are determined for training a machine-learning model 201.

The surface defect 42 to be investigated is for example a water break defect of a surface treatment process 4 being a surface treatment process 4 of a vehicle body 91. At different stages of the surface treatment process 4 basic data 102 including process parameters 501 were identified as key parameters influencing formation of a surface defect being a water break. The process parameters 501 were in this case data points in the format of (number // stage // application // process parameter). Thus, process parameters were excluded based on pre-defined criteria, such as parameters being infrequently measured, parameters having low-likelihood defect causation and non-measurable parameters like "improper surfuctant addition". The correlation between remaining basic data 102 including process parameters 501 and the surface defect 42 being a water break can for example be determined as shown in Table 7:

**Table 7: Correlation of basic data related to "waterbreak"**

| **Number** | **Stage name** | **Application** | **Process parameter** | **Correlation** |
|---|---|---|---|---|
| **Waterbreak** | | | | 100,000000 |
| 1 | Phosphating | Dip 1 | Total acid | 14,182612 |
| 2 | Degrease | Dip 1 | Total alkali | 12,300074 |
| 3 | Degrease | Dip 2 | Temperature | 12,045392 |
| 4 | RCDM | PT 1 | pH | 12,029504 |
| 5 | Activation | Dip 1 | pH | 12,004434 |
| 6 | Degrease | Dip 2 | Total Alkali | 11,969411 |
| 7 | Rinse | Water 3 | pH | 11,808129 |
| 8 | Degrease | Dip 1 | Temperature | 11,777054 |
| 9 | Phosphating | Dip 1 | Temperature | 11,660482 |
| 10 | Knock-Off Degrease | Spray 1 | Temperature | 11,582497 |
| 11 | Phosphating | Dip 1 | Gas Point | 11,564314 |
| 12 | Phosphating | Dip 1 | Sludge Content | 11,544005 |
| 13 | RCDM | Phosphating 1 | Conductivity | 11,035702 |
| 14 | Phosphating | Dip 1 | Free Acid | 11,015402 |
| 15 | Rinse | Water 3 | Conductivity | 8,828588 |
| 16 | Rinse | Water 1 | Conductivity | 8,206247 |
| 17 | Rinse | Water 2 | Conductivity | 7,122983 |
| 18 | Rinse | Water 2 | Total Acid | 3,10761 |
| 19 | Line Mark | | | 2,787777 |
| 20 | Patchy coating | | | 0,827625 |
| 21 | Knock-Off Degrease | Spray 1 | Oil Content | 0,102106 |
| 22 | Degrease | Dip 2 | Oil Content | -0,60157 |
| 23 | Degrease | Dip 1 | Oil Content | -0,75314 |
| 22 | Other factors | influenced | Waterbreak | -3,601124 |
| 23 | Knock-Off Degrease | Spray 1 | Total Alkali | -7,208439 |
| 24 | Knock-Off Degrease | Spray 1 | Pressure | -13,314813 |

Feature engineering 105 is performed by analyzing the collected basic data 102 including process parameters 501 according to Table 7, and incorporating domain expert knowledge 106, which is derived from a root cause analyses. The result of the feature engineering 105 is a set of features 107 including only the following 15 process parameters 501 and their corresponding correlation according to **Table 8:**

**Table 8: Correlations of 15 process parameters taken at different stages**

| **Number** | **Stage name** | **Application** | **Process parameter** | **Correlation in %** |
|---|---|---|---|---|
| 1 | Phosphating | Dip 1 | Total acid | 14,182612 |
| 2 | Degrease | Dip 1 | Total alkali | 12,300074 |
| 3 | Degrease | Dip 2 | Temperature | 12,045392 |
| 4 | RCDM | PT 1 | pH | 12,029504 |
| 5 | Activation | Dip 1 | pH | 12,004434 |
| 6 | Degrease | Dip 2 | Total Alkali | 11,969411 |
| 7 | Rinse | Water 1 | pH | 11,808129 |
| 8 | Degrease | Dip 1 | Temperature | 11,777054 |
| 9 | Phosphating | Dip 1 | Temperature | 11,660482 |
| 10 | Knock-Off Degrease | Spray 1 | Temperature | 11,582497 |
| 11 | Phosphating | Dip 1 | Gas Point | 11,564314 |
| 12 | Phosphating | Dip 1 | Sludge Content | 11,544005 |
| 13 | RCDM | Phosphating 1 | Conductivity | 11,035702 |
| 14 | Phosphating | Dip 1 | Free Acid | 11,015402 |
| 15 | Knock-Off Degrease | Spray 1 | Pressure | -13,314813 |

The matrix according to Table 8 is shown below:

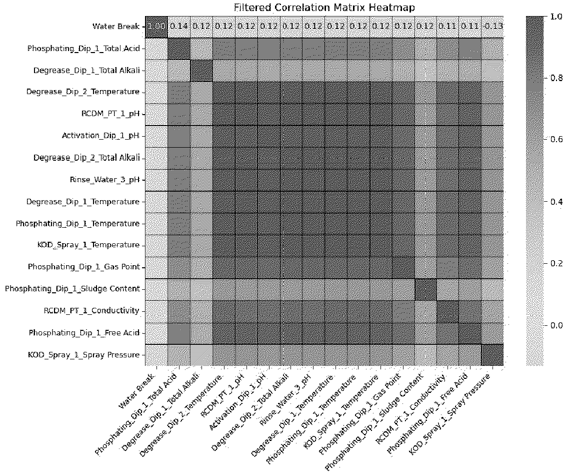

The set of features 107 according to Table 8 as part of the stored training data 104 is used to train the machine-learning model 20 with regard to the surface defect being a water break. Such a set of features as exemplary shown in Table 8 is generated for one or more surface defects 42 being a water break.

The stored training data further include severeal waterbreaks and their associated cause. Determining severeal water breaks with an associated cause for that special water break may be performed by associating a first waterbreak for example with a first process parameter being a data point 50i having a pressure of 4.8 bar, associating a second water break for example with a second process paraemter being a data point 50i having a temperature of 45°C and so on.

Training the machine-learning model 201 is carried out for example by using the stored training data 104. The stored training data 104 include for example several water breaks and their associated cause and several set of features according to Table 8.

Training the machine-learning model with a large number of such a set of features as shown in Table 8 and a large number of water breaks and their associated causes results in a trained machine-learning model 201, which may predict the occurrence of a surface defect 42 being a water break with a high quality.

In the previous text of this disclosure the training of the machine-learning model 201 is described exemplary for a surface defect 42 being a water break. The same method can be applied to other surface defects 42, for example for the surface defects shown in FIGS. 3 to 10.

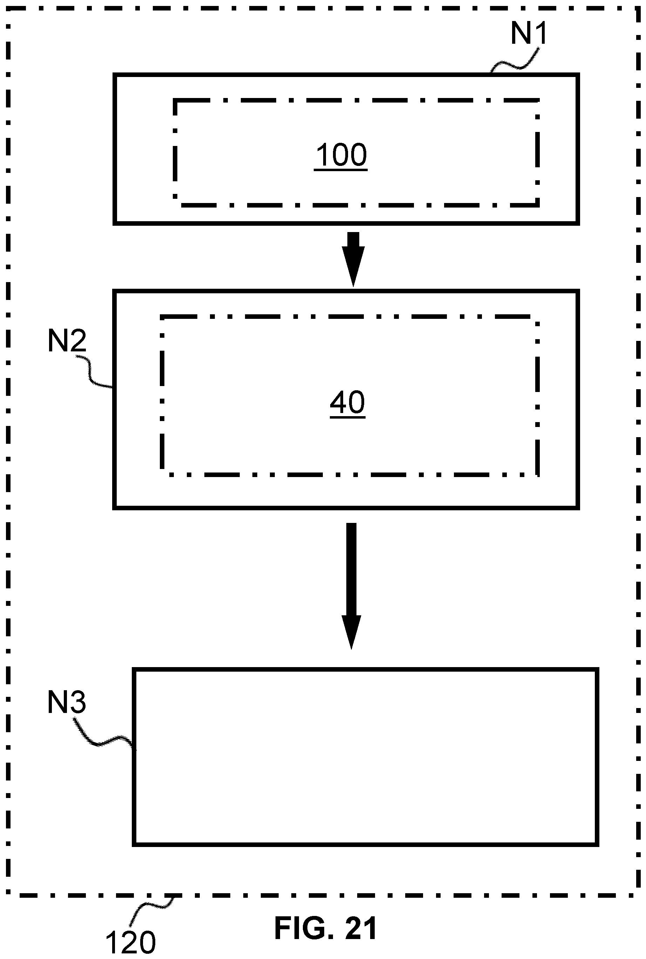

Another embodiment of the disclosure according to FIG. 21 is a method of monitoring a surface treatment process, the method including: (1) performing a method of training a machine-learning model as described above; (2) performing a method of predicting an occurrence of a surface defect in the surface treatment process as described above using the result of training the machine-learning model; and (3) managing the surface treatment process using the result of predicting the occurrence of the surface defect in the surface treatment process. The method of monitoring a surface treatment process 44 thus includes steps N1, N2 and N3. The method for monitoring a surface treatment process 44 may be carried out by the device 1 according to FIG. 11 by using the processor 10. The machine-learning model 20 according to FIG. 11 is part of the processor 10 and may be used as machine-learning model to be trained according to N1. In N2 the trained machine-learning model 20 of the device 1 according to FIG. 11 is used for predicting the occurrence of a surface defect in a surface treatment process 44. Using the machine-learning model 20 as trained machine-learning model for predicting the occurrence of a surface defect in the surface treatment process 44 provides for high quality of these predictions. These predictions can be used in N3 for managing the surface treatment process 44 in that way, that the number of surface defects 42 is reduced significantly.

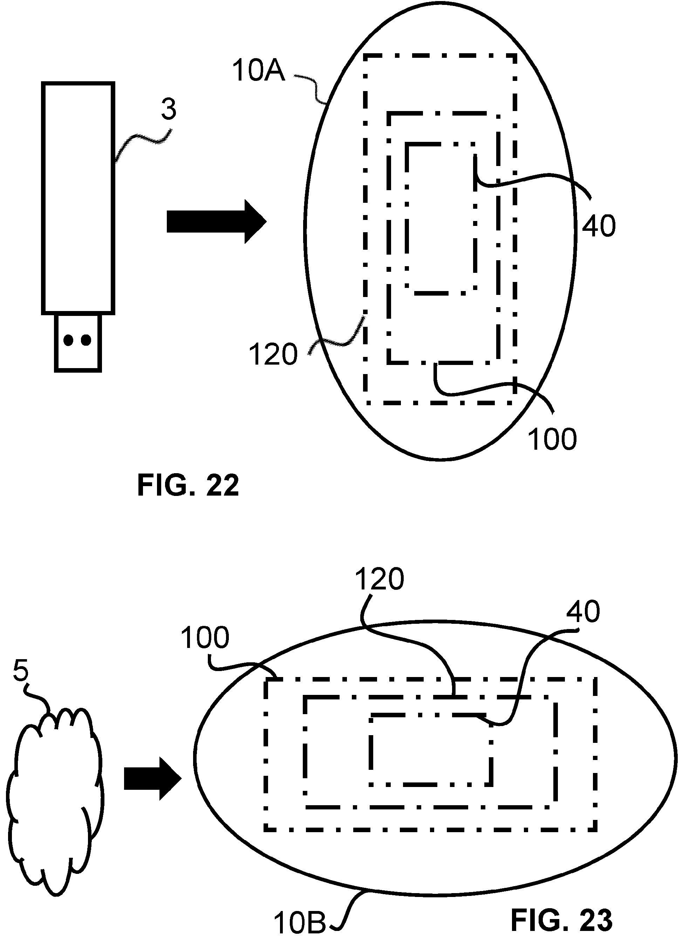

In another embodiment of this disclosure according to FIG. 22 a computer readable medium 3 storing instructions is provided, which, when performed by a processor 10A, implement a method 40 of predicting an occurrence 43 of a surface defect 42 in a surface treatment process 44 as described above and/or a method 46 of controlling a surface treatment process 42 as described above and/or a method 100 of training a machine-learning model 201 as described above and/or a method 120 of monitoring a surface treatment process 444. Such a computer readable medium 3 enables to perform either the above described method 40 of predicting an occurrence 43 of a surface defect 42 in a surface treatment process 44 and/or the above described method 46 of controlling a surface treatment process 42 and/or the above described method 100 of training a machine-learning model 201 and/or the above described method 120 of monitoring a surface treatment process 444 in an easy way at different locations having processors which are designed among others for such a purpose. The processor 10A may be similar to the processor 10 or alternatively different from the processor 10. The processor 10A further can be for example the processor 10 of the device 1 shown in FIG. 11, so that by connecting the computer readable medium 3 with the reading-module 24 of the device 1 of FIG. 11 implementation of a method 40 of predicting an occurrence 43 of a surface defect 42 in a surface treatment process 44 as described above and/or implementation of a method 46 of controlling a surface treatment process 44 and/or implementation of a method 100 of training a machine-learning model 201 as described above and/or implementation of a method 120 of monitoring a surface treatment process into the device 1 of FIG. 11 can be performed.

In another embodiment of the disclosure according to FIG. 23 a computer program product 5 including instructions is provided, which, when performed by a processor, implement a method 40 of predicting an occurrence 43 of a surface defect 42 in a surface treatment process 44 as described above and/or a method of controlling 48 a surface treatment process 44 as described above and/or a method 100 of training a machine-learning model 201 as described above and or a method 120 for monitoring a surface treatment process as described above. Such a computer program product 5 may be for example an application, which can be downloaded for example from a website (not shown) and/or a suitable app-cloud (not shown). The processor 10B may be similar to the processor 10 or alternatively different from the processor 10. The processor 10B further can be for example the processor 10 of the device 1 shown in FIG. 11, so that by connecting the computer program product 5 with the program-module of the device 1 of FIG. 11 a method 40 of predicting an occurrence 43 of a surface defect 42 in a surface treatment process 44 as described above and/or a method 46 of controlling 48 a surface treatment process as described above and/or a method 100 of training a machine-learning model 201 as described above and/or a method 120 of monitoring a surface treatment process 441 can be implemented into the device 1 of FIG. 11.

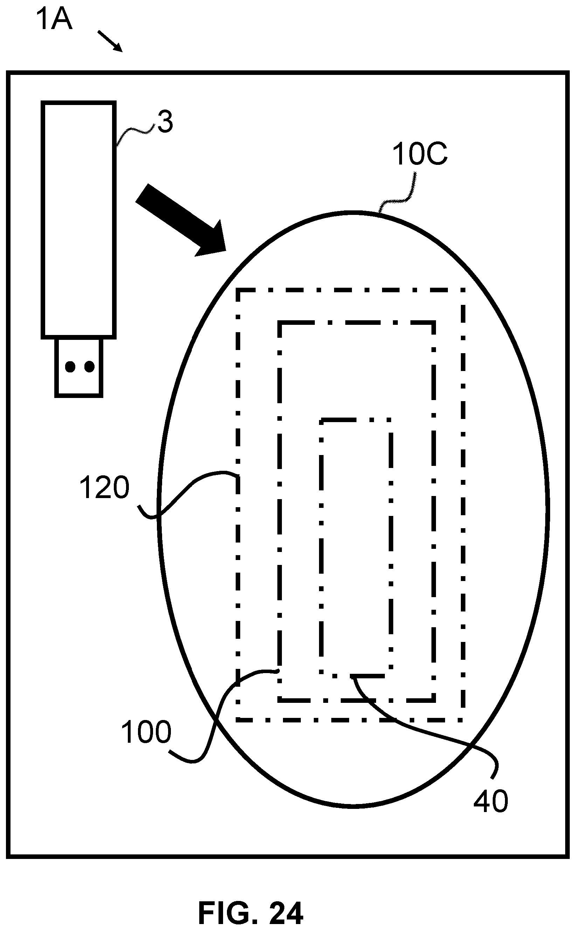

In another embodiment of the disclosure according to FIG. 24 a device 1A includes a processor 10C and a computer readable medium 3A storing instructions is provided, which, when performed by a processor, implement a method 40 of predicting an occurrence 43 of a surface defect 42 in a surface treatment process 44 as described above and/or a method 46 of controlling 48 a surface treatment process as described above and/or a method 100 of training a machine-learning model 201 as described above and/or a method 120 for monitoring a surface treatment process 444. The processor 10C may be similar to the processor 10 or alternatively different from the processor 10. The processor 10C further can be for example the processor 10 of the device 1 shown in FIG. 11, so that by using the computer readable medium 3A, for example by connecting it to the reading-module 24 of the device 1, the device 1 of FIG. 11 implements a method 40 of predicting an occurrence 43 of a surface defect 42 in a surface treatment process 44 as described above and/or a method 46 of controlling a surface treatment process 42 and/or a method 100 of training a machine-learning model 201 as described above and/or a method 120 of monitoring a surface treatment process 444. The device 1A of FIG. 23 may be similar to the device 1 of FIG: 11 but alternatively, the device 1A of FIG. 24 may be different from the device 1 of FIG. 11 and designed in such a way, that the device 1A of FIG: 24 can be used by the device 1 of FIG. 11. Such a device 1A enables to perform at least one of the above described methods 40, 48, 100 and/or 120 with low effort at different locations, where surface treatment processes 4, 44 and/or 444 are performed.

In the following, various aspects of this disclosure will be illustrated:
Example 1A is a method for predicting defects in the surface treatment of automotive during manufacturing, the method including :
   a. collecting data, using a data acquisition system digitally or manually, including process parameters from a plurality of stages of the surface treatment process, and logging defect occurrences, including associated root cause analyses for each defect, into a defect database;
   b. performing feature engineering, using a processing unit or manually, by analyzing the collected process parameters and/or incorporating domain expert knowledge derived from the root cause analyses to identify a set of relevant features indicative of potential defects;
   c. training, using a processing unit, a machine learning model with the engineered features and corresponding defect data to generate a trained machine learning model capable of predicting the occurrence of defects in real-time; and
   d. generating, using a processing unit, alerts within a digital system when the trained machine learning model predicts a defect, or the stage parameters are not within permissible range.
Example 2A is a system for predicting defects in the surface treatment of automotive during manufacturing, the system including:
   a. a data acquisition unit configured to collect process parameters from a plurality of stages of the surface treatment process.
   b. a defect logging unit configured to record defect occurrences, including associated root cause analyses for each defect.
   c. a feature engineering module configured to analyze the collected process parameters and/or incorporate domain expert knowledge derived from the root cause analyses to identify a set of relevant features indicative of potential defects.
   d. a machine learning model trained using the engineered features and corresponding defect data to predict the occurrence of defects in real-time; and
   e. an alert generation module configured to generate alerts within a digital system when the trained machine learning model predicts a defect.
Example 3A is a computer-implemented method for predicting defects in the surface treatment of automotive during manufacturing, the method including:
   a. receiving, by a processor, data including process parameters from a plurality of stages of the surface treatment process and defect occurrences, including associated root cause analyses for each defect.
   b. performing, by the processor, feature engineering by analyzing the received process parameters and incorporating domain expert knowledge derived from the root cause analyses to identify a set of relevant features indicative of potential defects.
   c. training, by the processor, a machine learning model using the engineered features and corresponding defect data to predict the occurrence of defects; and
   d. generating, by the processor, alerts within a digital system when the trained machine learning model predicts a defect or when received process parameters are outside permissible ranges defined by domain experts.

In Example 4A, the subject matter of any one of Examples 1A to 3A can optionally include that the process parameters include at least one parameter selected from the group consisting of stage parameters of bath from below list but not limited to the list:
(1) Temperature,
(2) Total alkali,
(3) Free alkali,
(4) Oil content,
(5) pH,
(6) Spray Pressure,
(7) Conductivity,
(8) Sludge content,
(9) Manganese,
(10) Nickel,
(11) Free acid,
(12) Total acid,
(13) Zinc,
(14) Coating weight,
(15) Gas Point.

In Example 5A, the subject matter of any one of Examples 1A to 4A can optionally include that the machine learning model is selected from the group consisting of a neural network, a support vector machine, a random forest, decision tree or a gradient boosting machine but not limited to this list.

In Example 6A, the subject matter of any one of Examples 1A to 5A can optionally include that the step of generating alerts includes generating alerts when received process parameters are outside permissible ranges defined by domain experts.

In Example 7A, the subject matter of any one of Examples 1A to 6A can optionally include that the step of generating alerts includes generating alerts when machine learning model predicted defect occurrence positive.

In Example 8A, the subject matter of any one of Examples 1A to 7A can optionally include that the root cause analysis includes identifying the specific stage parameter or process step contributing to the defect.

In Example 9A, the subject matter of any one of Examples 1A to 8A can optionally include that the domain expert knowledge is captured in a knowledge base or rule set.

In Example 10A, the subject matter of any one of Examples 1A to 9A can optionally include that the domain expert knowledge is applied while doing feature engineering for machine learning model training.

In Example 11A, the subject matter of any one of Examples 1A to 10A can optionally include that the data acquisition system includes sensors and actuators configured to collect real-time process data, or the data is acquired manually at manufacturing plant and stored into digital system or database.

In Example 12A, the subject matter of any one of Examples 1A to 11A can optionally include that the trained machine learning model is periodically updated with newly collected data and defect information to maintain prediction accuracy.

In Example 13A, the subject matter of any one of Examples 2A to 12A can optionally include that the feature engineering module employs a feature selection algorithm to identify the most relevant features for defect prediction.

In Example 14A, the subject matter of any one of Examples 2A to 13A can optionally include that the digital system is a manufacturing execution system (MES) or a programmable logic controller (PLC) or a software system deployed in cloud.

In Example 15A, the subject matter of any one of Examples 2A to 14A can optionally include that the alert generation module generates different alert levels based on the predicted defect.

In Example 16A, the subject matter of any one of Examples 2A to 15A can optionally further include a user interface for visualizing predicted defects and process parameters.

In Example 17A, the subject matter of any one of Examples 2A to 16A can optionally further include a user interface for generating reports for predicted defects and process parameters.

In Example 18A, the subject matter of any one of Examples 2A to 17A can optionally further include a user interface calculating cost savings by predicting the defects.

In Example 19A, the subject matter of any one of Examples 3A to 18A can optionally include that the permissible ranges are stored in a database accessible by the processor.

Example 1B is a method of predicting an occurrence of a surface defect in a surface treatment process. The method includes (1) applying one or more process parameters describing conditions during the surface treatment process and/or one or more operation parameters describing the operation of the surface treatment process to a machine-learning model; (2) predicting the occurrence of the surface defect in the surface treatment process using the machine-learning model.

In Example 2B, the subject matter of Example 1B can optionally include that the one or more process parameter(s) is/are captured during the surface treatment process, wherein the one or more process parameter(s) affect(s) the surface defect.

In Example 3B, the subject matter of any one of Examples 1B or 2B can optionally include that the one or more process parameters include(s) one or more environmental parameters describing environmental conditions during the surface treatment process and/or stage parameters describing conditions at one or more stages of the surface treatment process.

In Example 4B, the subject matter of any one of Examples 1B to 3B can optionally include that the surface treatment process is a process of coating a metal surface.

In Example 5B the subject matter of Example 4B can optionally include that the surface treatment process is a process of coating a metal surface of a car body.

In Example 6B, the subject matter of any one of Examples 4B or 5B can optionally include that the surface treatment process is a process performed during a vehicle manufacturing process.

In Example 7B, the subject matter of any one of Examples 1B to 6B can optionally include that for the one or more process parameters predefined ranges are determined.

In Example 8B, the subject matter of any one of Examples 1B to 7B can optionally include that the one or more operation parameters include one or more temperature parameters and/or one or more humidity parameters.

In Example 9B, the subject matter of any one of Examples 4B to 8B can optionally include that the one or more process parameters are parameters affecting the coating adhesion of the coating of the metal surface.

In Example 10B, the subject matter of any one of Examples 1B to 9B can optionally include that the one or more process parameter(s) include(s) are selected from a group of parameters consisting of:
(1) a concentration of free acid in a treatment solution used in the surface treatment process;
(2) a concentration of total acid in a treatment solution used in the surface treatment process;
(3) a concentration of free alkali in a treatment solution used in the surface treatment process;
(4) a concentration of total alkali in a treatment solution used in the surface treatment process;
(5) a temperature of the environment in which the surface treatment process is performed;
(6) an amount of oil in a treatment solution used in the surface treatment process;
(7) an acidity or alkalinity of a treatment solution used in the surface treatment process;
(8) a specific gas composition in an environment in which the surface treatment process is performed;
(9) a gas point used in the surface treatment process;
(10) an amount of sludge in a treatment solution used in the surface treatment process;
(11) a conductivity of a treatment solution used in the surface treatment process;
(12) a pressure at which a spray coating is applied in the surface treatment process;
(13) a concentration of Manganese in a treatment solution used in the surface treatment process;
(14) a concentration of Nickel in a treatment solution used in the surface treatment process;
(15) a concentration of Zinc in a treatment solution used in the surface treatment process;
(16) a weight of a coating deposited in the surface treatment process; and
(17) a pH value of a treatment solution used in the surface treatment process.

In Example 11B, the subject matter of any one of Examples 1B to 10B can optionally include that the one or more process parameters are parameters that directly or indirectly influence surface defect formation during the surface treatment process.

In Example 12B, the subject matter of any one of Examples 1B to 11B can optionally include that the surface defect is a visually detectable surface defect occurring in the surface treatment process on the surface.

In Example 13B, the subject matter of any one of Examples 1B to 12B can optionally include that the surface defect is a water break defect occurring in the surface treatment process on the surface.

In Example 14B, the subject matter of any one of Examples 1B to 13B can optionally include that the machine-learning model includes one or more decision tree models.

In Example 15B, the subject matter of Example 14B can optionally include that the machine-learning model includes a random forest classifier to predict the occurrence of the surface defect in the surface treatment process.

In Example 16B, the subject matter of any one of Examples 1B to 15B can optionally include that the method is performed by a processor.

Example 17B is a method of controlling a surface treatment process. The method includes (1) performing a method of predicting an occurrence of a surface defect in the surface treatment process of any one of Examples 1B to 16B; and (2) controlling the surface treatment process using the result of predicting the occurrence of the surface defect in the surface treatment process.

Example 18B is a method of training a machine-learning model. The method includes: (1) collecting basic data including process parameters during a surface treatment process; (2) determining one or more surface defect (s) of the surface treatment process and an associated cause for each surface defect, (3) storing the one or more surface defects(s) and the associated cause(s) for the surface defects as training data; and (4) training the machine-learning model using the stored training data.

In Example 19B, the subject matter of Example 18B can optionally include that the method further includes: (5) performing feature engineering by analyzing the collected basic data including process parameters and incorporating domain expert knowledge derived from a root cause analyses to identify a set of features indicative of the one or more surface defect(s) and the associated cause(s) for the surface defect(s).

In Example 20B, the subject matter of of any one of Example 18B or 19B can optionally include that the stored training data include the set of features indicative of the one or more surface defect(s) and the associated causes for the surface defect(s).

In Example 21B, the subject matter of of any one of Examples 18B to 20B can optionally include that the one or more surface defect(s) and the associated cause(s) for the surface defect(s) are stored into a defect database.

In Example 22B, the subject matter of of any one of Examples 18B to 21B can optionally include that the method is performed by a processor.

Example 23B is a method of monitoring a surface treatment process, the method including: (1) performing a method of training a machine-learning model of any one of Examples 18 to 22; (2) performing a method of predicting an occurrence of a surface defect in the surface treatment process of any one of claims 1 to 16 using the result of training the machine-learning model; and (3) managing the surface treatment process using the result of predicting the occurrence of the surface defect in the surface treatment process.

Example 24B is a computer readable medium storing instructions which, when performed by a processor, implement a method of any one of Examples 1B to 23B.

Example 25B is a computer program product including instructions, which, when performed by a processor, implement a method of any one of Examples 1B to 23B.

Example 26B is a device including: (1) a processor; and (2) a computer readable medium storing instructions, which, when performed by a processor, implement a method of any one of Examples 1B to 23B.

This disclosure introduces a novel approach leveraging machine learning to predict defects based on staging and bath parameters. By addressing this gap, the proposed methodology contributes to automotive manufacturing by offering a proactive solution to defect prediction, paving the way for improved quality assurance and operational efficiency.

This disclosure employs a mixed-methods approach combining quantitative analysis with machine learning techniques to develop a predictive model for surface treatment defects. The methodology consists of steps:
1. Data Collection: Historical production data is collected from automotive manufacturing plants, including information on staging parameters mentioned below and recorded defects:
   a) Total Acid,
   b) Total Alkali;
   c) Temperature;
   d) pH;
   e) Gas Point;
   f) Sludge Content;
   g) Conductivity;
   h) Spray Pressure;
2. Feature Engineering: Relevant parameters are identified based on the correlation to the defects as well as domain expertise of application engineers. This includes operational parameters related to surface treatment processes defects.
3. Model Development: Random Forest Classifier and Decision Tree algorithms are used to train predictive machine learning model to build capable of forecasting defects based on the identified features.
4. Validation: The developed models are validated using a separate dataset to assess their accuracy and reliability in predicting defects under varying operational conditions.

The disclosure addresses the lack of predictive methodologies for defect prediction in surface treatment processes within the automotive vehicle production industry. Existing research primarily focuses on defect detection rather than prediction, leading to a significant gap in understanding how environmental and operational parameters influence defect formation.

The disclosure provides for a novel predictive model that utilizes advanced machine learning algorithms and data analytics to forecast water break defects in automotive surface treatments. It incorporates various staging parameters - including total acid, total alkali, temperature, pH, gas point, sludge content, and conductivity - into its predictive framework. The model according to the disclosure aims to enhance quality control by predicting potential defects before they occur.

The disclosure provides for example for:
- Predictive Capability: Unlike existing methods that only detect defects, this model predicts their occurrence based on operational and environmental parameters.
- High Accuracy: The proposed methodology demonstrates a 98% accuracy rate in forecasting defect or non-defect days.
- Comprehensive Integration: It integrates multiple influencing factors into a single predictive framework, addressing the complexities of manufacturing environments more effectively than traditional methods.

Parameters driving this disclosure include for example
(1) Environmental Factors: Such as temperature and humidity that affect coating adhesion.
(2) Operational Parameters: Including total acid and alkali levels, pH, and spray pressure that directly influence defect formation.

While the invention has been particularly shown and described with reference to specific embodiments, it should be understood by those skilled in the art that various changes in form and detail may be made therein without departing from the spirit and scope of the invention as defined by the appended claims. The scope of the invention is thus indicated by the appended claims and all changes which come within the meaning and range of equivalency of the claims are therefore intended to be embraced.

### List of reference signs

- 1, 1A: device
- 3: computer readable medium
- 5: computer program product
- 10, 10A, 10B, 10C: processor
- 12: user-interface
- 14: input-module
- 16: output-module
- 18: storage
- 20, 201: machine-learning model
- 22: external data-source
- 24: reading-module
- 26: program-module
- 28: alert-module
- 30: housing
- 40: method of predicting an occurrence of a surface defect in a surface treatment process
- 42, 42A, 42B, 42C: surface defect
- 43: occurrence
- 45, 45A, 45B, 45C: cause
- 4, 44, 44A, 444: surface treatment process
- 46: method of controlling a surface treatment process
- 48: controlling a surface treatment process
- 50, 501: one or more process parameters
- 50A: one or more adjusted process parameters
- 52: one or more operation parameters
- 52A: one or more adjusted operation parameters
- 54: one or more environmental parameters
- 56: stage parameters
- 58: metal surface
- 60: car body
- 62: vehicle manufacturing process
- 66: one or more temperature parameters
- 68: one or more humidity parameters
- 69: parameters affecting the coating adhesion of the coating of the metal surface
- 70: a concentration of free acid in a treatment solution
- 71: a concentration of total acid in a treatment solution
- 72: a concentration of free alkali in a treatment solution
- 73: a concentration of total alkali in a treatment solution
- 74: a temperature of the environment
- 75: an amount of oil in a treatment solution
- 76: an acidity or alkalinity of a treatment solution
- 77: a specific gas composition in an environment
- 78: a gas point
- 79: an amount of sludge in a treatment solution
- 80: a conductivity of a treatment solution
- 81: a pressure at which a spray coating is applied
- 82: a concentration of Manganese in a treatment solution
- 83: a concentration of Nickel in a treatment solution
- 84: a concentration of Zinc in a treatment solution
- 85: a weight of a coating deposited
- 88: parameters that directly or indirectly influence surface defect formation during the surface treatment process
- 90: surface treatment line
- 91: vehicle body
- 92: Degreasing / Cleaning
- 93: Rinsing
- 94: Activation and rinsing
- 95: Phosphating
- 96: Rinsing
- 97: Passivation
- 98: Deionizing
- 100: method of training a machine-learning model
- 102: basic data
- 104: training data
- 105: feature engineering
- 106: domain expert knowledge
- 107: set of features indicative of the one or more surface defects
- 108: defect data base
- 110: decision tree
- 112: root node
- 113, 114, 116, 117: node
- 115, 118: leaf node
- 120: method of monitoring a surface treatment process
- S1, S2, S3: steps
- M1, M2, M3, M4, M5: steps
- N1, N2, N3: steps
- M_{A}(50), M_{B}(50): matrix of one or more process parameters

## Claims

1. A method of predicting an occurrence of a surface defect in a surface treatment process, the method comprising:
applying one or more process parameters describing conditions during the surface treatment process and/or one or more operation parameters describing the operation of the surface treatment process to a machine-learning model;
predicting the occurrence of the surface defect in the surface treatment process using the machine-learning model.

2. The method of claim 1,
wherein the one or more process parameter(s) is/are captured during the surface treatment process, wherein the one or more process parameter(s) affects/affect the surface defect.

3. The method of any one of claims 1 or 2,
wherein the one or more process parameters comprise(s) one or more environmental parameters describing environmental conditions during the surface treatment process and/or stage parameters describing conditions at one or more stages of the surface treatment process.

4. The method of any one of claims 1 to 3,
wherein the surface treatment process is a process of coating a metal surface.

5. The method of any one of claims 1 to 4,
wherein for the one or more process parameters predefined ranges are determined.

6. The method of any one of claims 1 to 5,
wherein the one or more operation parameters comprise one or more temperature parameters and/or one or more humidity parameters.

7. The method of any one of claims 4 to 6,
wherein the one or more process parameters are parameters affecting the coating adhesion of the coating of the metal surface.

8. The method of any one of claims 1 to 7,
wherein the one or more process parameter(s) comprise(s) one or more process parameters selected from a group of process parameters consisting of:
a concentration of free acid in a treatment solution used in the surface treatment process;
a concentration of total acid in a treatment solution used in the surface treatment process;
a concentration of free alkali in a treatment solution used in the surface treatment process;
a concentration of total alkali in a treatment solution used in the surface treatment process;
a temperature of the environment in which the surface treatment process is performed;
an amount of oil in a treatment solution used in the surface treatment process;
an acidity or alkalinity of a treatment solution used in the surface treatment process;
a specific gas composition in an environment in which the surface treatment process is performed;
a gas point used in the surface treatment process;
an amount of sludge in a treatment solution used in the surface treatment process;
a conductivity of a treatment solution used in the surface treatment process;
a pressure at which a spray coating is applied in the surface treatment process;
a concentration of Manganese in a treatment solution used in the surface treatment process;
a concentration of Nickel in a treatment solution used in the surface treatment process;
a concentration of Zinc in a treatment solution used in the surface treatment process; and
a weight of a coating deposited in the surface treatment process.

9. The method of any one of claims 1 to 8,
wherein the machine-learning model comprises one or more decision tree models;
preferably wherein the machine-learning model comprises a random forest classifier to predict the occurrence of the surface defect in the surface treatment process.

10. The method of any one of claims 1 to 9,
wherein the method is performed by a processor.

11. A method of controlling a surface treatment process, the method comprising:
performing a method of predicting an occurrence of a surface defect in the surface treatment process of any one of claims 1 to 10; and
controlling the surface treatment process using the result of predicting the occurrence of the surface defect in the surface treatment process.

12. A method of training a machine-learning model, the method comprising:
collecting basic data comprising process parameters during a surface treatment process;
determining one or more surface defect(s) of the surface treatment process and an associated cause for each surface defect,
storing the one or more surface defect(s) and the associated cause(s) for the surface defect as training data; and
training the machine-learning model using the stored training data.

13. A method of monitoring a surface treatment process, the method comprising:
performing a method of training a machine-learning model of claim 12; and
performing a method of predicting an occurrence of a surface defect in the surface treatment process of any one of claims 1 to 10 using the result of training the machine-learning model; and
managing the surface treatment process using the result of predicting the occurrence of the surface defect in the surface treatment process.

14. A computer readable medium storing instructions, which, when performed by a processor, implement a method of any one of claims 1 to 13.

15. A device comprising:
a processor; and
a computer readable medium storing instructions, which, when performed by the processor, implement a method of any one of claims 1 to 13.
